(19) Europäisches Patentamt
European Patent Office
Office européen des brevets

(11) EP 4 629 703 A1

(12) **EUROPEAN PATENT APPLICATION**
published in accordance with Art. 153(4) EPC

(43) Date of publication:
**08.10.2025 Bulletin 2025/41**

(21) Application number: **24741646.4**

(22) Date of filing: **08.01.2024**

(51) International Patent Classification (IPC):
***H04W 52/02*** *(2009.01)* ***H04W 72/232*** *(2023.01)*
***H04W 76/28*** *(2018.01)* ***H04W 68/02*** *(2009.01)*

(52) Cooperative Patent Classification (CPC):
**H04W 52/02; H04W 68/02; H04W 72/232; H04W 76/28;** Y02D 30/70

(86) International application number:
**PCT/KR2024/000330**

(87) International publication number:
**WO 2024/151025 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.01.2023 KR 20230002861**

(71) Applicant: **Samsung Electronics Co., Ltd.**
**Suwon-si, Gyeonggi-do 16677 (KR)**

(72) Inventors:
- **LEE, Jaewon**
  **Suwon-si, Gyeonggi-do 16677 (KR)**
- **RYU, Hyunsuk**
  **Suwon-si, Gyeonggi-do 16677 (KR)**
- **YANG, Hyewon**
  **Suwon-si, Gyeonggi-do 16677 (KR)**
- **YI, Junyung**
  **Suwon-si, Gyeonggi-do 16677 (KR)**
- **CHOI, Seunghoon**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE FOR REDUCING RECEPTION DELAY OF USER EQUIPMENT HAVING WAKEUP RECEIVER IN WIRELESS COMMUNICATION SYSTEM

(57) The present disclosure relates to a 5G or 6G communication system for supporting a higher data transfer rate. In addition, the purpose of the present disclosure is to provide a method and a device for reducing a reception delay time of a user equipment having a wakeup receiver in a mobile communication system. According to the present disclosure, an excessive reception delay time of a user equipment in a mobile communication system can be resolved.

FIG. 6

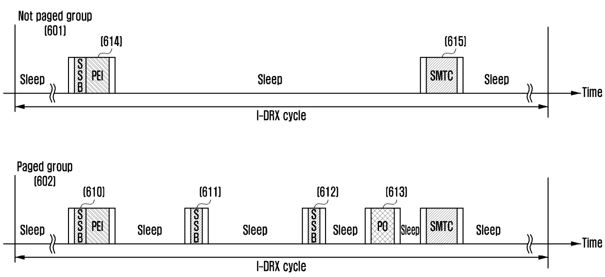


EP 4 629 703 A1

## Description

### [Technical Field]

The disclosure relates to a wireless communication system, and more particularly to a method and device for reducing reception delay of user equipment (UE) having a wake-up receiver

### [Background Art]

5G mobile communication technology defines a wide frequency band to enable fast transmission speeds and new services, and can be implemented not only in a sub-6GHz frequency band such as 3.5 gigahertz (3.5GHz), but also in an ultra-high frequency band ('above 6GHz') called millimeter wave (mmWave) such as 28GHz and 39GHz. In addition, in the case of 6G mobile communication technology, which is called systems beyond 5G communication, implementation in a terahertz band (e.g., 95GHz to 3 terahertz (3THz) band) is being considered to achieve a transmission speed that is 50 times faster than the 5G mobile communication technology and an ultra low latency time that is reduced by 1/10.

In the early stages of the 5G mobile communication technology, with the goal of ensuring service support and performance requirements for enhanced mobile broadband (eMBB), ultra-reliable low-latency communications (URLLC), and massive machine-type communications (mMTC), standardization has been made for beamforming and massive MIMO for mitigating a path loss of radio waves in a ultra-high frequency band and increase a transmission distance of the radio waves, support for various numerologies for efficient utilization of ultra-high frequency resources (operation of multiple subcarrier intervals, etc.) and dynamic operation of slot formats, initial access technology for supporting multi-beam transmission and broadband, definition and operation of a band-wide part (BWP), new channel coding methods, such as a low density parity check (LDPC) code for large-scale data transmission and a polar code for high reliable transmission of control information, L2 pre-processing, network slicing providing a dedicated network specialized for a specific service, etc.

Currently, discussions are underway for improvement and performance enhancement of the initial 5G mobile communication technology in consideration of services that the 5G mobile communication technology is intended to support, and physical layer standardization is in progress for technologies such as vehicle-to-everything (V2X) to help autonomous vehicles determine their driving based on their own locations and status information that the autonomous vehicles transmit and to increase user convenience, new radio unlicensed (NR-U) for system operation that meets various regulatory requirements in an unlicensed band, NR UE low power consumption technology (UE power saving), a non-terrestrial network (NTN) that is UE-satellite direct communication to secure coverage in areas where communication with a terrestrial network is impossible, and positioning.

In addition, standardization of wireless interface architecture/protocol fields is in progress for technologies such as industrial Internet of Things (IIoT) for supporting new services through linkage and convergence with other industries, integrated access and backhaul (IAB) that integrates and supports wireless backhaul links and access links to provide nodes for expanding network service areas, mobility enhancement including conditional handover and dual active protocol stack (DAPS) handover, and 2-step RACH for NR that simplifies random access procedures, and standardization of system architecture/service fields is also in progress for 5G baseline architecture (e.g., service based architecture, and service based interface) for combining network functions virtualization (NFV), software-defined networking (SDN) technology, mobile edge computing (MEC) that receives services based on a location of a UE, etc.

When such 5G mobile communication systems are commercialized, an explosive increase in connected devices will be connected to a communication network, so it is expected that improved functionality and performance of the 5G mobile communication systems and the integrated operation of the connected devices will be required. To this end, new researches are expected to be conducted on eXtended reality (XR) to efficiently support augmented reality (AR), virtual reality (VR), and mixed reality (MR), etc., improvement in 5G performance and reduction in complexity using artificial intelligence (AI) and machine learning (ML), AI service support, metaverse service support, drone communications, etc.

In addition, the development of these 5G mobile communication systems may serve as a basis for the development of not only multi-antenna transmission technology such as new waveform, full dimensional MIMO (FD-MIMO), array antenna, and large scale antenna to ensure coverage in the terahertz band of 6G mobile communication technology, high-dimensional spatial multiplexing technology using metamaterial-based lenses and antennas and orbital angular momentum (OAM) to improve the coverage of terahertz band signals, and reconfigurable intelligent surface (RIS) technology, but also full duplex technology for enhancing frequency efficiency and improving a system network of 6G mobile communication technology, AI-based communication technology that utilizes satellite and AI from the design stage and incorporates end-to-end AI support functions to realize system optimization, and next generation distributed computing technology that realizes services with complexity that exceeds the limits of UE computing capabilities by utilizing ultra-high-performance communication and computing resources, etc.

With the above description and the advancement of the mobile communication systems, it has become possible

to provide various services, and thus, there is a growing need for a method for effectively providing these services.

**[Disclosure of Invention]**

**[Technical Problem]**

The present disclosure is directed to providing a method and device for reducing reception delay of user equipment (UE) having a wake-up receiver in a wireless communication system.

**[Solution to Problem]**

According to an aspect of the present disclosure, a method of user equipment (UE) in a communication system may include: receiving information about a parameter related to a wake-up signal (WUS) from a base station; receiving the WUS from the base station through a wake-up receiver; triggering a main radio (MR) based on the WUS; and receiving a paging message through the MR within $K_3$ consecutive paging occasions (POs) after receiving the WUS.

According to another aspect of the present disclosure, a method of a base station in a communication system may include: transmitting information about a parameter related to a wake-up signal (WUS) to a UE; transmitting the WUS to the UE; and transmitting a paging message to the UE during $K_3$ consecutive paging occasions (POs) after transmitting the WUS.

According to still another aspect of the present disclosure, a UE of a communication system may include: a transceiver; and a controller controlling to receive information about a parameter related to a wake-up signal (WUS) from a base station; receive the WUS from the base station through a wake-up receiver; trigger a main radio (MR) based on the WUS; and receive a paging message through the MR within $K_3$ consecutive paging occasions (POs) after receiving the WUS.

According to still yet another aspect of the present disclosure, a base station of a wireless communication system may include: a transceiver; and a controller controlling to transmit information about a parameter related to a wake-up signal (WUS) to a UE; transmit the WUS to the UE, and transmit a paging message to the UE during $K_3$ consecutive paging occasions (POs) after transmitting the WUS.

**[Advantageous Effects of Invention]**

According to an embodiment of the present disclosure, by defining a signal transmission method of a base station in a wireless communication system, it is possible to provide a low reception delay time to a UE.

**[Brief Description of Drawings]**

FIG. 1 is a diagram illustrating an example of a basic structure of a time-frequency resource domain of a 5G system according to an embodiment of the present disclosure.
FIG. 2 is a diagram illustrating an example of a time domain mapping structure of a synchronization signal and a beam sweeping operation according to an embodiment of the present disclosure.
FIG. 3 is a diagram illustrating an example of a random access procedure according to an embodiment of the present disclosure.
FIG. 4 is a diagram illustrating an example of a procedure for user equipment (UE) to report UE capability information to a gNB according to an embodiment of the present disclosure.
FIG. 5 is a diagram illustrating that a gNB instructs a main radio state transition of a UE having a wake-up receiver (WUR) through a wake-up signal (WUS), according to an embodiment of the present disclosure.
FIG. 6 is a diagram illustrating timelines for a not paged group and a paged group of a 5G UE.
FIG. 7 is a diagram illustrating timelines for a not paged group and a paged group of the UE having the wake-up receiver (WUR).
FIG. 8 is a diagram illustrating the timeline of a 5G UE in a situation where eDRX is configured to a duration of 1024 radio frames or more.
FIG. 9 is a diagram illustrating the timeline of the UE having the wake-up receiver in the situation where the eDRX is configured to the duration of 1024 radio frames or more.
FIG. 10 is a diagram illustrating the timeline of the UE having the wake-up receiver when data requiring low-latency reception is generated in the situation where the eDRX is configured to the duration of 1024 radio frames or more.
FIG. 11 is a diagram illustrating timelines of a gNB, a legacy UE, and the UE having the wake-up receiver that indicate a

low-latency mode through the wake-up signal when the data requiring the low-latency reception is generated in the situation where the eDRX is configured to the duration of 1024 radio frames or more.

FIG. 12 is a diagram illustrating the timelines of the gNB, the legacy UE, and the UE having the wake-up receiver in which parameters for the low-latency mode are configured through DCI when the data requiring the low-latency reception is generated in the situation where the eDRX is configured to the duration of 1024 radio frames or more.

FIG. 13 is a diagram illustrating a procedure for UE assistance information (UAI).

FIG. 14 is a diagram illustrating a timeline in which the paged group of the 5G UE receives a TRS instead of an SSB burst before receiving a PO.

FIG. 15 is a diagram schematically illustrating RE mapping of the TRS.

FIG. 16 is a diagram illustrating a timeline in which the paged group of the UE having the wake-up receiver receives a TRS burst instead of the SSB burst before receiving the PO.

FIG. 17 is a diagram illustrating an example of a transceiver of a terminal in a wireless communication system according to an embodiment of the present disclosure.

FIG. 18 is a block diagram illustrating an example of a configuration of a terminal according to an embodiment of the present disclosure.

FIG. 19 is a block diagram illustrating an example of a configuration of a base station according to an embodiment of the present disclosure.

**[Mode for the Invention]**

Hereinafter, embodiments of the present disclosure will be described in detail with reference to the accompanying drawings. In addition, in describing the present disclosure, when it is determined that a detailed description for related known functions or configurations may unnecessarily obscure the gist of the present disclosure, the detailed description thereof will be omitted. Further, the following terminologies are defined in consideration of the functions in the present disclosure and may vary depending on the intention of users and operators, practice, etc. Therefore, the definitions thereof should be construed based on the contents throughout the specification.

Advantages and features of the present disclosure and methods accomplishing the same will become apparent from the following detailed description of example embodiments with reference to the accompanying drawings. However, the present disclosure is not limited to example embodiments to be described below, but may be implemented in various different forms, these example embodiments will be provided only in order to make the present disclosure complete and allow those skilled in the art to completely recognize the scope of the present disclosure, and the present disclosure will be defined by the scope of the claims. Throughout the specification, the same components will be denoted by the same reference numerals.

In this case, it will be appreciated that each block of a processing flowchart and combinations of the flowcharts may be executed by computer program instructions. Since these computer program instructions may be mounted in a processor of a general computer, a special computer, or other programmable data processing apparatuses, these computer program instructions executed through the processor of the computer or the other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may indicate some of modules, segments, or codes including one or more executable instructions for executing a specific logical function(s). Further, it is to be noted that functions mentioned in the blocks are generated regardless of an order in some alternative example embodiments. For example, two blocks that are continuously illustrated may be simultaneously performed in fact or be performed in a reverse order depending on corresponding functions.

In this case, the term '~unit' used in the present embodiment refers to software or a hardware component such as a field programmable gate array (FPGA) or an application specific integrated circuit (ASIC), and '~unit' play certain roles. However, '~unit' is not limited to the software or the hardware. The '~unit' may be configured to be stored in a storage medium that may be addressed or may be configured to reproduce one or more processors. Accordingly, as an example, the '~unit' refers to components such as software components, object-oriented software components, class components, and task components, processes, functions, attributes, procedures, subroutines, segments of program code, drivers,

firmware, microcode, circuits, data, databases, data structures, tables, arrays and variables. Components and functions provided within '~unit' may be combined into a smaller number of components and '~unit' or may be further separated into additional components and '~unit.' In addition, components and '~units' may be implemented to reproduce one or more central processing units (CPUs) in a device or a security multimedia card. In addition, in embodiments, the '~unit' may include one or more processors.

When it is determined that the detailed description of the related known functions or configurations in describing the present disclosure below may obscure the gist of the present disclosure, the detailed description thereof will be omitted. Hereinafter, embodiments of the present disclosure will be described with reference to the accompanying drawings.

In the following description, terms for identifying connection nodes, terms referring to network entities, terms referring to messages, terms referring to interfaces between network entities, terms referring to various types of identification information, etc., are provided for the convenience of description. Accordingly, the present disclosure is not limited to terms described below, and other terms referring to objects having equivalent technical meanings may be used.

In the following description, the terms physical channel and signal may be used interchangeably with data or a control signal. For example, a physical downlink shared channel (PDSCH) is a term referring to a physical channel through which data is transmitted, but the PDSCH may also be used to refer to data. That is, in the present disclosure, the expression 'transmitting the physical channel' may be interpreted equivalently to the expression 'transmitting data or a signal through the physical channel'.

Hereinafter, in the present disclosure, higher signaling refers to a signal transmission method for transmitting a signal from a base station to user equipment (UE) using a downlink data channel of a physical layer or a signal from a UE to a base station using an uplink data channel of a physical layer. The higher signaling may be understood as radio resource control (RRC) signaling or media access control (MAC) control element (CE).

Hereinafter, for convenience of description, the present disclosure uses terms and names defined in the 3GPP new radio (NR: 5th generation mobile communication standard) standard. However, the present disclosure is not limited to the above terms and names, and may be equally applied to systems that follow other standards. In addition, the term UE may represent not only mobile phones, smart phones, IoT devices, and sensors, but also other wireless communication devices.

Hereinafter, a base station is an entity that performs resource allocation of a UE, and may be at least one of a gNode B, a gNB, an eNode B, an eNB, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. Of course, the present disclosure is not limited to the above examples.

In order to address the recent surge in mobile data traffic, an initial standard of the 5G (5th Generation) system or new radio (NR) access technology, which is the next-generation communication system following long term evolution (LTE or evolved universal terrestrial radio access (E-UTRA)) and LTE-advanced (LTE-A or E-UTRA evolution), has been completed. The existing mobile communication systems have mainly focused on typical voice/data communications, but the 5G system aims to satisfy various services and requirements, such as enhanced mobile broadband (eMBB) service for improving existing voice/data communications, ultra-reliable and low latency communication (URLLC) service, and massive machine type communication (massive MTC) service for supporting massive machine-type communications.

A transmission bandwidth per single carrier of the existing LTE and LTE-A is limited to a maximum of 20MHz, but the 5G system aims to provide ultra-high-speed data services reaching several Gbps by utilizing a much wider ultra-wide bandwidth. Accordingly, the 5G system is considering ultra-high frequency bands from several GHz to up to 100 GHz, in which it is relatively easy to secure ultra-wide bandwidth frequencies, as candidate frequencies. Additionally, it is possible to secure wide bandwidth frequencies for the 5G system through frequency reallocation or allocation among frequency bands included in hundreds of MHz to several GHz that are used in the existing mobile communication systems.

Radio waves in the ultra-high frequency band have wavelengths on the order of a few millimeters, and are also called millimeter waves (mmWave). However, in the ultra-high frequency band, a pathloss of the radio waves increases in proportion to the frequency band, so the coverage of the mobile communication system decreases.

In order to overcome the disadvantage of the reduction in coverage in the ultra-high frequency band, a beamforming technology is applied that focuses radiated energy of the radio waves to a predetermined target point using multiple antennas to increase a range of the radio waves. That is, a signal to which the beamforming technology is applied has a relatively narrow beam width, and the radiated energy is focused within the narrowed beam width, thereby increasing the range of the radio waves. The beamforming technology may be applied to a transmitter and a receiver, respectively. The beamforming technology has the effect of reducing interference in an area other than a beamforming direction as well as the effect of increasing the coverage. In order for the beamforming technology to operate properly, an accurate measurement and feedback method of transmission/reception beams are required. The beamforming technology may be applied to a control channel or a data channel corresponding one-to-one between a predetermined UE and a

base station. In addition, the beamforming technology may be applied to common signals transmitted from a base station to multiple UEs in the system, such as a synchronization signal, a physical broadcast channel (PBCH), and a control channel and a data channel for transmitting system information, to increase the coverage. When the beamforming technology is applied to the common signals, a beam sweeping technology, which changes a beam direction to transmit signals, is additionally applied so that the common signals may reach UEs existing at arbitrary locations within a cell.

Another requirement of the 5G system is ultra-low latency service that is a transmission delay of approximately 1 ms between the transmitter and receiver. One way to reduce the transmission delay is to design a frame structure based on a short transmission time interval (TTI) compared to the LTE and LTE-A. The TTI is a basic time unit for performing scheduling, and the TTI of the existing LTE and LTE-A systems is 1 ms corresponding to a duration of one subframe. For example, in order to satisfy the requirements for the ultra-low latency service of the above 5G system, a short TTI of 0.5 ms, 0.25 ms, 0.125 ms, etc., which is shorter than the existing LTE and LTE-A systems, is possible.

According to an embodiment of the present disclosure, by defining a signal transmission method of a UE having a wake-up receiver in a mobile communication system, it is possible to solve the problem of excessive power consumption of the UE and achieve the high energy efficiency.

FIG. 1 is a diagram illustrating an example of a basic structure of a time-frequency resource domain of a 5G system according to an embodiment of the present disclosure. That is, FIG. 1 is a diagram illustrating a basic structure of a time-frequency resource domain, which is a wireless resource domain in which data or control channels of the 5G system are transmitted.

Referring to FIG. 1, a horizontal axis represents a time domain, and a vertical axis represents a frequency domain. A minimum transmission unit in the time domain of the 5G system is an orthogonal frequency division multiplexing (OFDM) symbol, and $N_{symb}^{slot}$ symbols 102 may be gathered to form one slot 106, and $N_{slot}^{subframe}$ slots may be gathered to form one subframe 105. The duration of the subframe is 1.0 ms, and 10 subframes may be gathered to form a 10 ms frame 114. A minimum transmission unit in the frequency domain is a subcarrier, and the entire system transmission bandwidth may be composed of a total of $N_{BW}$ subcarriers 104.

In the time-frequency domain, a basic unit of resources is a resource element (RE) 112, which may be represented by an OFDM symbol index and a subcarrier index. A resource block (RB or physical resource block (PRB)) may be defined as $N_{sc}^{RB}$ consecutive subcarriers 110 in the frequency domain. In the 5G system, $N_{sc}^{RB}$ $=$ 12, and a data rate may increase in proportion to the number of RBs scheduled to the UE.

In the 5G system, the base station may map data in RB units and generally perform scheduling on RBs that constitute one slot for a predetermined UE. That is, a basic time unit in which the scheduling is performed in the 5G system may be a slot, and a basic frequency unit in which the scheduling is performed may be an RB.

The number of OFDM symbols $N_{symb}^{slot}$ is determined by a duration of a cyclic prefix (CP) added to each symbol to prevent interference between symbols. For example, when a normal CP is applied, $N_{symb}^{slot} = 14$, and when an extended CP is applied, $N_{symb}^{slot} = 12$. The extended CP is applied to a system with a relatively long range of radio wave transmission compared to the normal CP, so orthogonality between symbols may be maintained. For the normal CP, since a ratio of the CP duration and the symbol duration is maintained at a constant value, an overhead due to the CP may be maintained constant regardless of subcarrier spacing. In other words, when the subcarrier spacing is small, the symbol duration becomes longer, and the CP duration may also become longer accordingly. Conversely, when the subcarrier spacing is large, the symbol duration becomes shorter, and the CP duration may also become shorter accordingly. The symbol duration and the CP duration may be inversely proportional to the subcarrier spacing.

In the 5G systems, to satisfy various services and requirements, various frame structures may be supported by adjusting the subcarrier spacing. For example,

- In terms of an operating frequency band, the larger the subcarrier spacing, the more advantageous it is for recovering phase noise in a high-frequency band.
- In terms of a transmission time, the larger the subcarrier spacing, the shorter the symbol duration in the time domain. As a result, the shorter the slot duration, the more advantageous it is for supporting ultra-low latency services such as URLLC.
- In terms of a cell size, the longer the CP duration, the larger the cell can be supported, so the smaller the subcarrier spacing, the relatively larger the cell may be supported. A cell is a concept that refers to an area covered by one base station in mobile communications.

The subcarrier spacing, the CP duration, etc., are essential information for OFDM transmission and reception, and the base station and the UE should recognize the subcarrier spacing, the CP duration, etc., as a common value to each other to enable seamless transmission and reception. [Table 1] shows the relationship between a subcarrier spacing configuration ($\mu$), a subcarrier spacing ($\Delta$f), and a CP duration that are supported by the 5G system.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

[Table 2] shows the number $N_{symb}^{slot}$ of symbols per slot, the number $N_{slot}^{frame,\mu}$ of slots per frame, and the number $N_{slot}^{subframe,\mu}$ of slots per subframe, for each subcarrier spacing configuration ($\mu$) for a normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3] shows the number $N_{symb}^{slot}$ of symbols per slot, the number $N_{slot}^{frame,\mu}$ of slots per frame, and the number $N_{slot}^{subframe,\mu}$ of slots per subframe, for each subcarrier spacing configuration ($\mu$) for the extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the early stages of the introduction of the 5G system, at least coexistence or dual mode operation with the existing LTE or/and LTE-A (hereinafter referred to as LTE/LTE-A) system is expected. As a result, the existing LTE/LTE-A may provide a stable system operation to the UE, and the 5G system may serve to provide improved services to the UE. Therefore, the frame structure of the 5G system needs to include at least the frame structure or essential parameter set (subcarrier spacing = 15 kHz) of the LTE/LTE-A.

For example, comparing a frame structure (hereinafter referred to as frame structure A) with a subcarrier spacing configuration of $\mu$ = 0 and a frame structure (hereinafter referred to as frame structure B) with a subcarrier spacing configuration of $\mu$ = 1, compared to the frame structure A, the frame structure B indicates that the subcarrier spacing and the resource block (RB) size are doubled, while the slot duration and the symbol duration are reduced by half. In the case of the frame structure B, two slots may constitute one subframe, and 20 subframes may constitute one frame.

When the frame structure of the 5G system is generalized, the subcarrier spacing, the CP duration, the slot duration, etc., which are the essential parameter sets, have an integer multiple relationship with each other for each frame

structure, thereby providing high scalability. In addition, a subframe with a fixed duration of 1ms may be defined to represent a reference time unit that is independent of the frame structure.

The frame structure may be applied to correspond to various scenarios. In terms of the cell size, the longer the CP duration, the larger the cell can be supported, so the frame structure A may support a relatively larger cell than the frame structure B. In terms of the operating frequency band, since the larger the subcarrier spacing, the more advantageous it is for recovering the phase noise in the high-frequency band, the frame structure B may support a relatively higher operating frequency than the frame structure A. In terms of the service, since it is advantageous for the slot duration, which is the basic time unit of scheduling, to be shorter in order to support ultra-low latency services like URLLC, the frame structure B may be relatively more suitable for the URLLC service than the frame structure A.

In the description of the present disclosure below, uplink (UL) may refer to a wireless link through which the UE transmits the data or a control signal to the base station, and downlink (DL) may refer to a wireless link through which the base station transmits the data or a control signal to the UE.

In the initial access phase in which the UE first accesses the system, the UE may match downlink time and frequency synchronization from a synchronization signal transmitted by the base station through cell search, and acquire a cell identifier (cell ID). The UE may receive a physical broadcast channel (PBCH) using the acquired cell ID and acquire a master information block (MIB), which is essential system information, from the PBCH. Additionally, the UE may receive system information (system information block (SIB)) transmitted by the base station to acquire cell-common transmission and reception-related control information. The cell-common transmission and reception-related control information may include random access-related control information, paging-related control information, common control information about various physical channels, etc.

The synchronization signal is a signal that serves as a reference for the cell search, and the subcarrier spacing may be applied to be suitable for a channel environment, such as the phase noise, for each frequency band. In the case of the data channel or the control channel, the subcarrier spacing may be applied differently depending on a service type in order to support various services as described above.

FIG. 2 is a diagram illustrating an example of a time domain mapping structure of a synchronization signal and a beam sweeping operation.

The following components may be defined for description.

- Primary Synchronization Signal (PSS): It is a signal that serves as a reference for DL time/frequency synchronization and provides some information about a cell ID.
- Secondary Synchronization Signal (SSS): It is a signal that serves as a reference for DL time/frequency synchronization and provides some remaining information about a cell ID. Additionally, the SSS may serve as a reference signal for demodulating the PBCH.
- Physical Broadcast Channel (PBCH): It provides a master information block (MIB), which is essential system information required for transmission and reception of a data channel and a control channel of a UE. The essential system information may include information such as search space-related control information indicating radio resource mapping information of the control channel, scheduling control information about a separate data channel transmitting system information, and system frame number (SFN), which is a frame unit index that serves as a timing reference.
- Synchronization Signal/PBCH Block (SS/PBCH block or SSB): An SS/PBCH block is composed of N OFDM symbols and composed of a combination of PSS, SSS, PBCH, etc. In the case of the system to which the beam sweeping technology is applied, the SS/PBCH block is a minimum unit in which the beam sweeping is applied. In the 5G system, N may be 4. A gNB may transmit up to L SS/PBCH blocks, and L SS/PBCH blocks are mapped within a half frame (0.5 ms). The L SS/PBCH blocks are periodically repeated in units of a predetermined periodicity P. The periodicity P may be notified to the UE by the gNB through signaling. When there is no separate signaling for the periodicity P, the UE applies a pre-agreed default value.

Referring to FIG. 2, FIG. 2 illustrates an example in which the beam sweeping is applied in units of SS/PBCH block over time. In the example of FIG. 2, UE1 205 receives an SS/PBCH block using a beam radiated in a direction of #d0 203 by beamforming applied to SS/PBCH block #0 at time t1 201. UE2 206 receives an SS/PBCH block using a beam radiated in a direction of #d4 204 by beamforming applied to SS/PBCH block #4 at time t2 202. The UE may acquire an optimal synchronization signal through a beam radiated from the gNB in the direction where the UE is located. For example, it may be difficult for the UE1 205 to acquire the time/frequency synchronization and the essential system information from the SS/PBCH block through the beam radiated in the direction of #d4, which is far from the location of the UE1.

In addition to the initial access procedure, the UE may also receive the SS/PBCH block to determine whether the radio link quality of the current cell is maintained at a certain level or higher. In addition, in a handover procedure in which the UE moves its connection from the current cell to an adjacent cell, the UE may receive SS/PBCH blocks of the adjacent

cell to determine the radio link quality of the adjacent cell and acquire the time/frequency synchronization of the adjacent cell.

After the UE acquires the MIB and the system information from the gNB through the initial access procedure, the UE may perform a random access procedure to transition a link with the gNB to a connected state (or RRC_CONNECTED state). Upon completing the random access procedure, the UE transitions to the connected state, and enables one-to-one communication between the gNB and the UE. The random access procedure will be described in detail with reference to FIG. 3 below.

FIG. 3 is a diagram illustrating an example of the random access procedure.

Referring to FIG. 3, as a first step 310 of the random access procedure, the UE may transmit a random access preamble to the gNB. The random access preamble, which is a first transmission message of the UE in the random access procedure, may be referred to as message 1. The gNB may measure a transmission delay value between the UE and the gNB from the random access preamble and match the uplink synchronization. In this case, the UE may arbitrarily select which random access preamble to use within a random access preamble set given in advance by the system information. The initial transmit power of the random access preamble may be determined according to the pathloss measured by the UE between the gNB and the UE. In addition, the UE may determine a transmission beam direction of the random access preamble from the synchronization signal received from the gNB and transmit the random access preamble.

In a second step 320, the gNB transmits an uplink transmission timing adjustment command to the UE based on the transmission delay value measured from the random access preamble received in the first step 310. In addition, the gNB may transmit the uplink resource and a power control command to be used by the UE as the scheduling information. The scheduling information may include control information about the uplink transmission beam of the UE.

When the UE does not receive a random access response (RAR) (or message 2), which is scheduling information for message 3 in the second step 320, from the gNB within a predetermined time, the first step 310 may be performed again. When the first step 310 is performed again, the UE may increase (power ramping) the transmit power of the random access preamble by a predetermined step and transmit the transmit power, thereby increasing the probability of the gNB receiving the random access preamble.

In a third step 330, the UE transmits uplink data (message 3) including UE's ID to the gNB through an uplink data channel (physical uplink shared channel (PUSCH)) using the uplink resources allocated in the second step 320. The transmission timing of the uplink data channel for transmitting the message 3 may follow the timing control command received from the gNB in the second step 320. The transmit power of the uplink data channel for transmitting the message 3 may be determined considering the power control command received from the gNB in the second step 320 and a power ramping value of the random access preamble. The uplink data channel for transmitting the message 3 may mean an initial uplink data signal that the UE transmits to the gNB after the UE transmits the random access preamble.

In a fourth step 340, when the gNB determines that the UE has performed a random access without collision with other UEs, the gNB may transmit data (message 4) including the ID of the UE that has transmitted the uplink data in the third step 330 to the corresponding UE. When the UE receives the signal transmitted by the gNB in the fourth step 340 from the gNB, the UE may determine that the random access is successful. The UE may transmit HARQ-ACK information indicating whether the message 4 is successfully received to the gNB through the uplink control channel (physical uplink control channel (PUCCH)).

When the data transmitted by the UE in the third step 330 and data of another UE collide with each other and thus the gNB fails to receive the data signal from the UE, the gNB may no more perform the data transmission to the UE. Accordingly, when the UE fails to receive the data transmitted from the gNB in the fourth step 340 within a certain time, the UE may be determined that the random access procedure has failed and may be restarted from the first step 310.

Upon successfully completing the random access procedure, the UE transitions to the connected state, and enables one-to-one communication between the gNB and the UE. The gNB may receive a report of UE capability information from the UE in the connected state adjust the scheduling by referring to the UE capability information of the corresponding UE. Through the UE capability information, the UE may inform the gNB whether the UE itself supports a predetermined function, a maximum allowable value of the function supported by the UE, etc. Accordingly, the UE capability information reported by each UE to the gNB may have different values for each UE.

For example, the UE may report the UE capability information including at least part of the following control information as the UE capability information to the gNB.

- Frequency band-related control information supported by the UE
- Channel bandwidth-related control information supported by the UE
- Control information related to maximum modulation scheme supported by the UE
- Control information related to the maximum number of beams supported by the UE
- Control information related to the maximum number of layers supported by the UE
- CSI reporting-related control information supported by the UE
- Control information on whether the UE supports frequency hopping

- Bandwidth-related control information when supporting carrier aggregation (CA)
- Control information on whether to support cross carrier scheduling when supporting carrier aggregation

FIG. 4 is a diagram illustrating an example of a procedure for the UE to report the UE capability information to the gNB.

Referring to FIG. 4, in step 410, a gNB 402 may transmit a UE capability information request message to a UE 401. By the gNB requesting the UE capability information, the UE transmits the UE capability information to the gNB in step 420.

Through the above-described process, the UE connected to the gNB is a UE in the RRC-CONNECTED state, and may perform one-to-one communication. On the other hand, a UE that is not connected is a UE in an RRC_IDLE state, and operations of the UE in the RRC_IDLE state may be classified as follows. Of course, this is limited to the following example.

- Operating a UE-specific discontinuous reception (DRX) cycle configured by a higher layer
- Operation of receiving a paging message from a core network
- Acquiring the system information
- Neighboring cell-related measurement operation and cell reselection

In the 5G system, a UE in a new state called RRC_INACTIVE is defined to reduce the energy and time consumed for the initial access of the UE. An RRC_INACTIVE UE may perform the following operations in addition to the operation performed by an RRC_IDLE UE. Of course, this is limited to the following example.

- Storage of access stratum (AS) information required for cell access
- UE-specific DRX cycle operation configured by an RRC layer
- Configuration of RAN-based notification area (RNA) that may be utilized for handover by the RRC layer and periodically performing an update
- Monitoring an RAN-based paging message transmitted via I-RNTI

Hereinafter, a scheduling method is described in which the gNB transmits downlink data to the UE or instructs the UE to transmit the uplink data.

Downlink control information (DCI) is control information that the gNB transmits to the UE through the downlink, and may include downlink data scheduling information or uplink data scheduling information for a predetermined UE. In general, the gNB may independently channel-code the DCI for each UE and then transmit the channel-coded DCI to each UE through a physical downlink control channel (PDCCH) which is a downlink physical control channel.

The gNB may operate by applying, to a UE to be scheduled, a predetermined DCI format according to the purpose, such as whether the DCI is scheduling information (downlink assignment) for downlink data, the DCI is scheduling information (uplink grant) for uplink data, and the DCI is DCI for power control.

The gNB may transmit the downlink data to the UE through the physical downlink shared channel (PDSCH) which is a physical channel for downlink data transmission. The scheduling information, such as a specific mapping location in the time and frequency domain of the PDSCH, the modulation scheme, HARQ-related control information, and power control information, may be notified to the UE by the gNB through the DCI related to the downlink data scheduling information among the DCIs transmitted through the PDCCH.

The UE may transmit the uplink data to the gNB through the physical uplink shared channel (PUSCH) which is the physical channel for the uplink data transmission. The scheduling information, such as the specific mapping location in the time and frequency domain of the PUSCH, the modulation scheme, the HARQ-related control information, and the power control information, may be notified to the UE by the gNB through the DCI related to the uplink data scheduling information among the DCIs transmitted through the PDCCH.

The time-frequency resource to which the PDCCH is mapped is called a control resource set (CORESET). The CORESET may be configured to all or part of the frequency resources of the bandwidth supported by the UE in the frequency domain. In the time domain, the CORESET may be configured with one or more OFDM symbols, which may be defined as a CORESET duration (control resource set duration). The gNB may configure one or more CORESETs for the UE through higher layer signaling (e.g., system Information, master information block (MIB), radio resource control (RRC) signaling). Configuring the CORESET to the UE may mean providing information such as a CORESET identity, a frequency location of the CORESET, and a symbol duration of the CORESET. The information that the gNB provides to the UE to configure the CORESET may include at least some of the information included in <Table 4>.

[Table 4]

```
ControlResourceSet ::=            SEQUENCE {
    controlResourceSetId              ControlResourceSetId,
    frequencyDomainResources           BIT STRING (SIZE (45)),
   duration                           INTEGER (1..maxCoReSetDuration),
    cce-REG-MappingType                CHOICE {
        interleaved                        SEQUENCE {
            reg-BundleSize             ENUMERATED {n2, n3, n6},
          interleaverSize          ENUMERATED {n2, n3, n6},
          shiftIndex               INTEGER(0..maxNrofPhysicalResourceBlocks-1)
OPTIONAL -- Need S
        },
        nonInterleaved                     NULL
    },
    precoderGranularity                ENUMERATED {sameAsREG-bundle, allContiguousRBs},
   tci-StatesPDCCH-ToAddList          SEQUENCE(SIZE (1..maxNrofTCI-StatesPDCCH)) OF
TCI-StateId OPTIONAL, -- Cond NotSIB1-initialBWP
    tci-StatesPDCCH-ToReleaseList   SEQUENCE(SIZE (1..maxNrofTCI-StatesPDCCH)) OF
TCI-StateId OPTIONAL, -- Cond NotSIB1-initialBWP
    tci-PresentInDCI                   ENUMERATED {enabled}
OPTIONAL, -- Need S
    pdcch-DMRS-ScramblingID              INTEGER (0..65535)
OPTIONAL, -- Need S

}
```

The CORESET may be composed of $N_{RB}^{CORESET}$ RBs in the frequency domain and may be composed of $N_{symb}^{CORESET} \in \{1, 2, 3\}$ symbols in the time domain. An NR PDCCH may be composed of one or more control channel elements (CCE). One CCE may be composed of six resource element groups (REGs), and the REG may be defined as 1 RB during 1 OFDM symbol. Within one CORESET, the REG may be indexed in time-first order, starting with REG index 0 at the first OFDM symbol and the lowest RB of the CORESET.

An interleaved method and a non-interleaved method may be supported as the transmission methods for the PDCCH. The gNB may configure whether to perform interleaved or non-interleaved transmission for each CORESET to the UE through higher layer signaling. Interleaving may be performed in units of REG bundles. The REG bundle may be defined as a set of one or more REGs. The UE may determine a CCE-to-REG mapping scheme in the corresponding CORESET based on whether to perform the interleaving or non-interleaving transmission configured by the gNB, as shown in <Table 5> below.

[Table 5]

| |
|---|
| The CCE-to-REG mapping for a control-resource set can be interleaved or non-interleaved and is described by REG bundles:<br>- REG bundle $i$ is defined as REGs $\{iL, iL+1, ..., iL+L-1\}$ where $L$ is the REG bundle size, $i = 0,1,\ldots,N_{REG}^{\text{CORESET}}/L - 1$, and $N_{\text{REG}}^{\text{CORESET}} = N_{\text{RB}}^{\text{CORESET}} N_{\text{symb}}^{\text{CORESET}}$ is the number of REGs in the CORESET<br>- CCE $j$ consists of REG bundles $\{f(6j/L), f(6j/L+1), ..., f(6j/L+6/L-1)\}$ where $f(\cdot)$ is an interleaver<br>For non-interleaved CCE-to-REG mapping, $L = 6$ and $f(x) = x$.<br>For interleaved CCE-to-REG mapping, $L \in \{2,6\}$for $N_{\text{symb}}^{\text{CORESET}} = 1$ and $L \in \{N_{\text{symb}}^{\text{CORESET}}, 6\}$ for $N_{\text{symb}}^{\text{CORESET}} \in \{2,3\}$. The interleaver is defined by<br>$$f(x) = (rC + c + n_{\text{shift}}) \bmod (N_{\text{REG}}^{\text{CORESET}}/L)$$ $$x = cR + r$$ $$r = 0,1,\ldots,R-1$$ $$c = 0,1,\ldots,C-1$$ $$C = N_{\text{REG}}^{\text{CORESET}}/(LR)$$ where $R \in \{2,3,6\}$. |

The gNB may notify the UE of the configuration information, such as which symbol the PDCCH is mapped to within the slot and a transmission periodicity, through the signaling.

A search space of the PDCCH is described as follows. The number of CCEs required to transmit the PDCCH may be 1, 2, 4, 8, or 16 depending on the aggregation level (AL), and different numbers of CCEs may be used to implement link adaptation of the downlink control channel. For example, when AL = L, one downlink control channel may be transmitted through L CCEs. The UE performs blind decoding to detect a signal without knowing information about the downlink control channel. To this end, the search space representing a set of CCEs may be defined. The search space is a set of downlink control channel candidates composed of the CCEs that the UE should attempt to decode on the given aggregation level, and since there are various aggregation levels that make a single bundle with 1, 2, 4, 8, and 16 CCEs, the UE may have a plurality of search spaces. A search space set may be defined as a set of search spaces at all configured aggregation levels.

The search space may be classified into a common search space (CSS) and a UE-specific search space (USS). A certain group of UEs or all UEs may search the common search space of the PDCCH to receive the cell-common control information such as dynamic scheduling or a paging message for the system information block (SIB). For example, the UE may receive scheduling allocation information of the PDSCH for receiving the system information by searching for the common search space of the PDCCH. In the case of the common search space, since a certain group of UEs or all the UEs should receive the PDCCH, the common search space may be defined as a set of pre-agreed CCEs. The UE may receive the scheduling allocation information for the UE-specific PDSCH or PUSCH by searching for the UE-specific search space of the PDCCH. The UE-specific search space may be defined UE-specifically as a function of the UE's identity (ID) and various system parameters.

The gNB may configure, for the UE, the configuration information for the search space of the PDCCH through higher layer signaling (e.g., SIB, MIB, and RRC signaling). For example, the gNB may configure, for the UE, the number of PDCCH candidates at each aggregation level L, a monitoring periodicity for the search space, a monitoring occasion for each symbol in the slot for the search space, a search space type (common search space or UE-specific search space), a combination of the DCI format and the RNTI to be monitored in the corresponding search space, the CORESET index to monitor the search space, etc. For example, the parameters for the search space for the PDCCH may include information as shown in <Table 6> below.

[Table 6]

```
SearchSpace ::=                          SEQUENCE {
    searchSpaceId                            SearchSpaceId,
    controlResourceSetId                 ControlResourceSetId                     OPTIONAL,
-- Cond SetupOnly
    monitoringSlotPeriodicityAndOffset CHOICE {
        sl1                                      NULL,
        sl2                                      INTEGER (0..1),
        sl4                                      INTEGER (0..3),
        sl5                                      INTEGER (0..4),
        sl8                                      INTEGER (0..7),
        sl10                                     INTEGER (0..9),
        sl16                                     INTEGER (0..15),
        sl20                                     INTEGER (0..19),
        sl40                                     INTEGER (0..39),
        sl80                                     INTEGER (0..79),
        sl160                                    INTEGER (0..159),
        sl320                                    INTEGER (0..319),
        sl640                                    INTEGER (0..639),
        sl1280                                   INTEGER (0..1279),
        sl2560                                   INTEGER (0..2559)
    }
OPTIONAL,     -- Cond Setup
    duration                                 INTEGER (2..2559)
OPTIONAL,     -- Need R
    monitoringSymbolsWithinSlot              BIT STRING (SIZE (14))
OPTIONAL,     -- Cond Setup
    nrofCandidates                       SEQUENCE {
        aggregationLevel1                    ENUMERATED {n0, n1, n2, n3, n4, n5, n6, n8},
        aggregationLevel2                    ENUMERATED {n0, n1, n2, n3, n4, n5, n6, n8},
        aggregationLevel4                    ENUMERATED {n0, n1, n2, n3, n4, n5, n6, n8},
        aggregationLevel8                    ENUMERATED {n0, n1, n2, n3, n4, n5, n6, n8},
        aggregationLevel16                   ENUMERATED {n0, n1, n2, n3, n4, n5, n6, n8}
    }
OPTIONAL,     -- Cond Setup
    searchSpaceType                          CHOICE {
        common                                   SEQUENCE {
            dci-Format0-0-AndFormat1-0               SEQUENCE {
                ...
            }
OPTIONAL,     -- Need R
            dci-Format2-0                            SEQUENCE {
                nrofCandidates-SFI                       SEQUENCE {
```

```
                    aggregationLevel1                  ENUMERATED {n1, n2}
OPTIONAL,   -- Need R
                    aggregationLevel2                  ENUMERATED {n1, n2}
OPTIONAL,   -- Need R
                    aggregationLevel4                  ENUMERATED {n1, n2}
OPTIONAL,   -- Need R
                    aggregationLevel8                  ENUMERATED {n1, n2}
OPTIONAL,   -- Need R
                    aggregationLevel16                 ENUMERATED {n1, n2}
OPTIONAL    -- Need R
                  },
                  ...
                }
OPTIONAL,   -- Need R
                dci-Format2-1                      SEQUENCE {
                  ...
                }
OPTIONAL,   -- Need R
                dci-Format2-2                      SEQUENCE {
                  ...
                }
OPTIONAL,   -- Need R
                dci-Format2-3                      SEQUENCE {
                  dummy1                               ENUMERATED {sl1, sl2, sl4, sl5,
sl8, sl10, sl16, sl20}   OPTIONAL,    -- Cond Setup
                  dummy2                               ENUMERATED {n1, n2},
                  ...
                }
OPTIONAL    -- Need R
            },
            ue-Specific                            SEQUENCE {
                dci-Formats                            ENUMERATED {formats0-0-And-1-0,
formats0-1-And-1-1},
                ...,

            }
        }
OPTIONAL    -- Cond Setup2
}
```

According to the configuration information, the gNB may configure one or more search space sets for the UE. According to an embodiment of the present disclosure, the gNB may configure search space set 1 and search space set 2 for the UE. In the search space set 1, the UE may be configured to monitor DCI format A scrambled with X-RNTI in the common search space, and in the search space set 2, the UE may be configured to monitor DCI format B scrambled with Y-RNTI in the UE-specific search space.

According to the configuration information, one or more search space sets may exist in the common search space or the UE-specific search space. For example, search space set #1 and search space set #2 may be configured as the common search space, and search space set #3 and search space set #4 may be configured as the UE-specific search space.

In the common search space, the UE may monitor the following combinations of DCI formats and RNTIs. Of course, it is not limited to the above example.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the UE may monitor the following combinations of DCI formats and RNTIs. Of course, it is not limited to the above example.

- DCI format 0_0/1_0 with CRC scrambled by C-RNTI, CS-RNTI, TC-RNTI

- DCI format 1_0/1_1 with CRC scrambled by C-RNTI, CS-RNTI, TC-RNTI

The above-described RNTIs may follow the following definitions and uses.

- Cell RNTI (C-RNTI): For UE-specific PDSCH or PUSCH scheduling
- Temporary cell RNTI (TC-RNTI): For UE-specific PDSCH scheduling
- Configured Scheduling RNTI (CS-RNTI): For semi-statically configured UE-specific PDSCH scheduling
- Random Access RNTI (RA-RNTI): For PDSCH scheduling in random access phase
- Paging RNTI (P-RNTI): For PDSCH scheduling for paging transmission
- System Information RNTI (SI-RNTI): For PDSCH scheduling to transmit system information
- Interruption RNTI (INT-RNTI): For notifying whether puncturing is performed on PDSCH
- Transmit Power Control for PUSCH RNTI (TPC-PUSCH-RNTI): For power control command indication for PUSCH
- Transmit Power Control for PUCCH RNTI (TPC-PUCCH-RNTI): For power control command indication for PUCCH
- Transmit Power Control for SRS RNTI (TPC-SRS-RNTI): For power control command indication for SRS

The DCI formats described above may follow the definitions as shown in <Table 7> below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |

(continued)

| DCI format | Usage |
|---|---|
| 2_2 | Transmission of TPC commands for PUCCH and PUSCH |
| 2_3 | Transmission of a group of TPC commands for SRS transmissions by one or more UEs |
| 2_4 | Notifying the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying paging early indication and TRS availability indication for one or more UEs. |
| 3_0 | Scheduling of NR sidelink in one cell |
| 3_1 | Scheduling of LTE sidelink in one cell |
| 4_0 | Schedulng of PDSCH with CRC scrambled by MCCH-RNTI/G-RNTI for broadcast |
| 4_1 | Schedulng of PDSCH with CRC scrambled by G-RNTI/GCS-RNTI for multicast |
| 4_2 | Schedulng of PDSCH with CRC scrambled by G-RNTI/GCS-RNTI for multicast |

In CORESET p and search space set s, the search space of aggregation level L may be expressed as the following mathematical formula.

[Mathematical Formula 1]

$$L \cdot \left\{ \left( Y_{p,n^{\mu}_{s,f}} + \left\lfloor \frac{m_{s,n_{CI}} \cdot N_{\mathrm{CCE},p}}{L \cdot M^{(L)}_{p,s,\max}} \right\rfloor + n_{CI} \right) mod \lfloor N_{\mathrm{CCE},p}/L \rfloor \right\} + i$$

- L: Aggregation level
- $n_{CI}$: Carrier index
- $N_{CCE,p}$: The total number of CCEs existing in control resource set p
- $n^{\mu}_{s,f}$: Slot index
- $M^{(L)}_{p,s,max}$: The number of PDCCH candidate groups of aggregation level L
- $m_{snCI}$ = 0, ..., $M^{(L)}_{p,s,max}$ -1: PDCCH candidate group index of aggregation level L
- i = 0, ..., L-1
-

$$Y_{p,n^{\mu}_{s,f}} = \left( A_p \cdot Y_{p,n^{\mu}_{s,f}-1} \right) mod\ D$$

,

$$Y_{p,-1} = n_{\mathrm{RNTI}} \neq 0$$

,

$$A_0 = 39827$$

,

$$A_1 = 39829$$

,

$$A_2 = 39839$$

,

$$D = 65537$$

- $n_{RNTI}$: UE identity

$Y_{p,n^{\mu}_{s,f}}$ value may correspond to 0 for the common search space. $Y_{p,n^{\mu}_{s,f}}$ value may correspond to a value that changes according to the UE's ID (C-RNTI or ID configured by the gNB for the UE) and the time index in the case of the UE-specific search space.

Next, the downlink control information (DCI) in the 5G communication system will be described in detail.

In the 5G communication system, the scheduling information for uplink data (or physical uplink shared channel (PUSCH)) or downlink data (or physical downlink shared channel (PDSCH)) is transmitted from the gNB to the UE by the DCI. The UE may monitor a fallback DCI format and a non-fallback DCI format for the PUSCH or the PDSCH. The fallback DCI format may be composed of a fixed field predefined between the gNB and the UE, and the non-fallback DCI format may include a configurable field.

The DCI may be transmitted through the physical downlink control channel (PDCCH) by a channel coding and modulation process. A cyclic redundancy check (CRC), which is attached to a DCI message payload, may be scrambled by a radio network temporary identifier (RNTI) corresponding to a UE identity. Different RNTIs may be used depending on the purpose of the DCI message, such as UE-specific data transmission, power control command, or random access response. That is, the RNTI is not transmitted explicitly, but is transmitted by being included in a CRC calculation process. When receiving the DCI message transmitted on the PDCCH, the UE may identify the CRC using the allocated RNTI, and when the CRC identification result is correct, may know that the corresponding message was transmitted to the UE.

For example, DCI scheduling the PDSCH for the system information (SI) may be scrambled by an SI-RNTI. The DCI scheduling the PDSCH for a random access response (RAR) message may be scrambled by an RA-RNTI. DCI scheduling the PDSCH for a paging message may be scrambled by a P-RNTI. DCI notifying a slot format indicator (SFI) may be scrambled by an SFI-RNTI. The DCI notifying transmit power control (TPC) may be scrambled by a TPC-RNTI. DCI scheduling a UE-specific PDSCH or PUSCH may be scrambled by a C-RNTI (cell RNTI).

DCI format 0_0 may be used as the fallback DCI scheduling the PUSCH. In this case, the CRC may be scrambled by a C-RNTI. The DCI format 0_0 with the CRC scrambled by the C-RNTI may include, for example, information as shown in Table 8 below.

[Table 8]

| |
|---|
| - Identifier for DCI formats - 1 bit<br>    - The value of this bit field is always set to 0, indicating an UL DCI format<br>- Frequency domain resource assignment - $\lceil log_2(N_{RB}^{UL,BWP}(N_{RB}^{UL,BWP}+1)/2)\rceil$ bits where $N_{RB}^{UL,BWP}$ is defined in subclause 7.3.1.0<br>    - For PUSCH hopping with resource allocation type 1:<br>        - $N_{UL_hop}$ MSB bits are used to indicate the frequency offset according to Subclause 6.3 of [6, TS 38.214], where $N_{UL_hop}$ = 1 if the higher layer parameter *frequencyHoppingOffsetLists* contains two offset values and $N_{UL_hop}$ = 2 if the higher layer parameter *frequencyHoppingOffsetLists* contains four offset values<br>        - $\lceil log_2(N_{RB}^{UL,BWP}(N_{RB}^{UL,BWP}+1)/2)\rceil - N_{UL_hop}$ bits provides the frequency domain resource allocation according to Subclause 6.1.2.2.2 of [6, TS 38.214]<br>    - For non-PUSCH hopping with resource allocation type 1:<br>        - $\lceil log_2(N_{RB}^{UL,BWP}(N_{RB}^{UL,BWP}+1)/2)\rceil$ bits provides the frequency domain resource allocation according to Subclause 6.1.2.2.2 of [6, TS 38.214] |

(continued)

| |
|---|
| - Time domain resource assignment - 4 bits as defined in Subclause 6.1.2.1 of [6, TS 38.214]<br>- Frequency hopping flag - 1 bit according to Table 7.3.1.1.1-3, as defined in Subclause 6.3 of [6, TS 38.214]<br>- Modulation and coding scheme - 5 bits as defined in Subclause 6.1.4.1 of [6, TS 38.214]<br>- New data indicator - 1 bit<br>- Redundancy version - 2 bits as defined in Table 7.3.1.1.1-2<br>- HARQ process number - 4 bits<br>- TPC command for scheduled PUSCH - 2 bits as defined in Subclause 7.1.1 of [5, TS 38.213]<br>- Padding bits, if required.<br>- UL/SUL indicator - 1 bit for UEs configured with *supplementaryUplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).<br>- If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured;<br>- If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.<br>- If the UL/SUL indicator is not present in DCI format 0_0 and *pucch-Config* is not configured, the corresponding PUSCH scheduled by the DCI format 0_0 is for the uplink on which the latest PRACH is transmitted. |

DCI format 0_1 may be used as the non-fallback DCI scheduling the PUSCH. In this case, the CRC may be scrambled by the C-RNTI. The DCI format 0_1 with the CRC scrambled by the C-RNTI may include, for example, information as shown in Table 9 below.

[Table 9]

| |
|---|
| - Identifier for DCI formats - 1 bit<br>- The value of this bit field is always set to 0, indicating an UL DCI format<br>- Carrier indicator - 0 or 3 bits, as defined in Subclause 10.1 of [5, TS38.213].<br>- UL/SUL indicator - 0 bit for UEs not configured with *supplementaryUplink* in *ServingCellConfig* in the cell or UEs configured with *supplementaryUplink* in *ServingCellConfig* in the cell but only PUCCH carrier in the cell is configured for PUSCH transmission; otherwise, 1 bit as defined in Table 7.3.1.1.1-1.<br>- Bandwidth part indicator - 0, 1 or 2 bits as determined by the number of UL BWPs $n_{\mathrm{BWP,RRC}}$ configured by higher layers, excluding the initial UL bandwidth part. The bitwidth for this field is determined as $\lceil log_2(n_{\mathrm{BWP}}) \rceil$ bits, where<br>- $n_{\mathrm{BWP}} = n_{\mathrm{BWP,RRC}} + 1$ if $n_{\mathrm{BWP,RRC}} \leq 3$, in which case the bandwidth part indicator is equivalent to the ascending order of the higher layer parameter *BWP-Id*;<br>- otherwise $n_{\mathrm{BWP}} = n_{\mathrm{BWP,RRC}}$, in which case the bandwidth part indicator is defined in Table 7.3.1.1.2-1;<br>If a UE does not support active BWP change via DCI, the UE ignores this bit field.<br>- Frequency domain resource assignment - number of bits determined by the following, where $N_{\mathrm{RB}}^{\mathrm{UL,BWP}}$ is the size of the active UL bandwidth part:<br>- $N_{\mathrm{RBG}}$ bits if only resource allocation type 0 is configured, where $N_{\mathrm{RBG}}$ is defined in Subclause 6.1.2.2.1 of [6, TS 38.214],<br>- $\lceil log_2(N_{\mathrm{RB}}^{\mathrm{UL,BWP}}(N_{\mathrm{RB}}^{\mathrm{UL,BWP}}+1)/2) \rceil$ bits if only resource allocation type 1 is configured, or<br>$max(\lceil log_2(N_{\mathrm{RB}}^{\mathrm{UL,BWP}}(N_{\mathrm{RB}}^{\mathrm{UL,BWP}}+1)/2) \rceil, N_{\mathrm{RBG}}) + 1$ bits if both resource allocation type 0 and 1 are configured.<br>- If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.<br>- For resource allocation type 0, the $N_{\mathrm{RBG}}$ LSBs provide the resource allocation as defined in Subclause 6.1.2.2.1 of [6, TS 38.214]. |

(continued)

- For resource allocation type 1, the $\lceil log_2(N_{RB}^{UL,BWP}(N_{RB}^{UL,BWP}+1)/2) \rceil$ LSBs provide the resource allocation as follows:

- For PUSCH hopping with resource allocation type 1:

- $N_{UL_hop}$ MSB bits are used to indicate the frequency offset according to Subclause 6.3 of [6, TS 38.214], where $N_{UL_hop}$ = 1 if the higher layer parameter *frequencyHoppingOffsetLists* contains two offset values and $N_{UL_hop}$ = 2 if the higher layer parameter *frequencyHoppingOffsetLists* contains four offset values

- $\lceil log_2(N_{RB}^{UL,BWP}(N_{RB}^{UL,BWP}+1)/2) \rceil - N_{UL_hop}$ bits provides the frequency domain resource allocation according to Subclause 6.1.2.2.2 of [6, TS 38.214]

- For non-PUSCH hopping with resource allocation type 1:

-

$$\lceil log_2(N_{RB}^{UL,BWP}(N_{RB}^{UL,BWP}+1)/2) \rceil$$

bits provides the frequency domain resource allocation according to Subclause 6.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 6.1.2.1 of [6, TS38.214]. The bitwidth for this field is determined as

$$\lceil log_2(I) \rceil$$

bits, where *I* is the number of entries in the higher layer parameter *pusch-TimeDomainAllocationList* if the higher layer parameter is configured; otherwise *I* is the number of entries in the default table.

- Frequency hopping flag - 0 or 1 bit:

- 0 bit if only resource allocation type 0 is configured or if the higher layer parameter *frequencyHopping* is not configured;

- 1 bit according to Table 7.3.1.1.1-3 otherwise, only applicable to resource allocation type 1, as defined in Subclause 6.3 of [6, TS 38.214].

- Modulation and coding scheme - 5 bits as defined in Subclause 6.1.4.1 of [6, TS 38.214]

- New data indicator - 1 bit

- Redundancy version - 2 bits as defined in Table 7.3.1.1.1-2

- HARQ process number - 4 bits

- 1st downlink assignment index - 1 or 2 bits:

- 1 bit for semi-static HARQ-ACK codebook;

- 2 bits for dynamic HARQ-ACK codebook.

- 2nd downlink assignment index - 0 or 2 bits:

- 2 bits for dynamic HARQ-ACK codebook with two HARQ-ACK sub-codebooks;

- 0 bit otherwise.

- TPC command for scheduled PUSCH - 2 bits as defined in Subclause 7.1.1 of [5, TS38.213]

(continued)

- SRS resource indicator $-\left\lceil \log_2\left(\sum_{k=1}^{min\{L_{max},N_{SRS}\}}\binom{N_{\mathrm{SRS}}}{k}\right)\right\rceil$ or $\lceil \log_2(N_{\mathrm{SRS}})\rceil$ bits, where $N_{\mathrm{SRS}}$ is the number of configured SRS resources in the SRS resource set associated with the higher layer parameter *usage* of value *'codeBook'* or *'nonCodeBook'.*

    - $\left\lceil \log_2\left(\sum_{k=1}^{min\{L_{max},N_{SRS}\}}\binom{N_{\mathrm{SRS}}}{k}\right)\right\rceil$ bits according to Tables 7.3.1.1.2-28/29/30/31 if the higher layer parameter *txConfig* = *nonCodebook,* where $N_{\mathrm{SRS}}$ is the number of configured SRS resources in the SRS resource set associated with the higher layer parameter *usage* of value *'nonCodeBook'* and

        - if UE supports operation with *maxMIMO-Layers* and the higher layer parameter *maxMIMO-Layers* of *PUSCH-ServingCellConfig* of the serving cell is configured, $L_{max}$ is given by that parameter

        - otherwise, $L_{\max}$ is given by the maximum number of layers for PUSCH supported by the UE for the serving cell for non-codebook based operation.

    - $\lceil \log_2(N_{\mathrm{SRS}})\rceil$ bits according to Tables 7.3.1.1.2-32 if the higher layer parameter *txConfig* = *codebook,* where $N_{\mathrm{SRS}}$ is the number of configured SRS resources in the SRS resource set associated with the higher layer parameter *usage* of value *'codeBook'.*

- Precoding information and number of layers - number of bits determined by the following:

    - 0 bits if the higher layer parameter *txConfig* = *nonCodeBook*;

    - 0 bits for 1 antenna port and if the higher layer parameter *txConfig* = *codebook;*

    - 4, 5, or 6 bits according to Table 7.3.1.1.2-2 for 4 antenna ports, if *txConfig* = *codebook,* and according to whether transform precoder is enabled or disabled, and the values of higher layer parameters *maxRank,* and *codebookSubset*;

    - 2, 4, or 5 bits according to Table 7.3.1.1.2-3 for 4 antenna ports, if *txConfig* = *codebook,* and according to whether transform precoder is enabled or disabled, and the values of higher layer parameters *maxRank,* and *codebookSubset;*

    - 2 or 4 bits according to Table7.3.1.1.2-4 for 2 antenna ports, if *txConfig* = *codebook,* and according to whether transform precoder is enabled or disabled, and the values of higher layer parameters *maxRank* and *codebookSubset;*

    - 1 or 3 bits according to Table7.3.1.1.2-5 for 2 antenna ports, if *txConfig* = *codebook,* and according to whether transform precoder is enabled or disabled, and the values of higher layer parameters *maxRank* and *codebookSubset.*

- Antenna ports - number of bits determined by the following

    - 2 bits as defined by Tables 7.3.1.1.2-6, if transform precoder is enabled, *dmrs-Type*=1, and *maxLength*=1;

    - 4 bits as defined by Tables 7.3.1.1.2-7, if transform precoder is enabled, *dmrs-Type*=1, and *maxLength*=2;

    - 3 bits as defined by Tables 7.3.1.1.2-8/9/10/11, if transform precoder is disabled, *dmrs-Type*=1*,* and *maxLength*=1, and the value of rank is determined according to the SRS resource indicator field if the higher layer parameter *txConfig* = *nonCodebook* and according to the Precoding information and number of layers field if the higher layer parameter *txConfig* = *codebook;*

    - 4 bits as defined by Tables 7.3.1.1.2-12/13/14/15, if transform precoder is disabled, *dmrs-Type*=1, and *maxLength*=2*,* and the value of rank is determined according to the SRS resource indicator field if the higher layer parameter *txConfig* = *nonCodebook* and according to the Precoding information and number of layers field if the higher layer parameter *txConfig* = *codebook;*

(continued)

| | | |
|---|---|---|
| | - 4 bits as defined by Tables 7.3.1.1.2-16/17/18/19, if transform precoder is disabled, *dmrs-Type*=2, and *maxLength*=1, and the value of rank is determined according to the SRS resource indicator field if the higher layer parameter *txConfig = nonCodebook* and according to the Precoding information and number of layers field if the higher layer parameter *txConfig = codebook;*<br>- 5 bits as defined by Tables 7.3.1.1.2-20/21/22/23, if transform precoder is disabled, *dmrs-Type*=2, and *maxLength*=2*,* and the value of rank is determined according to the SRS resource indicator field if the higher layer parameter *txConfig = noncodebook* and according to the Precoding information and number of layers field if the higher layer parameter *txConfig = codebook.*<br>where the number of CDM groups without data of values 1, 2, and 3 in Tables 7.3.1.1.2-6 to 7.3.1.1.2-23 refers to CDM groups {0}, {0,1}, and {0, 1,2} respectively. | |
| | | If a UE is configured with both *dmrs-UplinkForPUSCH-MappingTypeA* and *dmrs-UplinkForPUSCH-MappingTypeB,* the bitwidth of this field equals *max*{$x_A$, $x_B$}, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB.* A number of $\lfloor x_A - x_B \rfloor$ zeros are padded in the MSB of this field, if the mapping type of the PUSCH corresponds to the smaller value of $x_A$ and $x_B$. |

- SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CSI request - 0, 1, 2, 3, 4, 5, or 6 bits determined by higher layer parameter *reportTriggerSize.*

- CBG transmission information (CBGTI) - 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH.

- PTRS-DMRS association - number of bits determined as follows

| | |
|---|---|
| | - 0 bit if *PTRS-UplinkConfig* is not configured and transform precoder is disabled, or if transform precoder is enabled, or if *maxRank=1*;<br>- 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field.<br>If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part. |

- beta_offset indicator - 0 if the higher layer parameter *betaOffsets = semiStatic*; otherwise 2 bits as defined by Table 9.3-3 in [5, TS 38.213].

- DMRS sequence initialization - 0 bit if transform precoder is enabled; 1 bit if transform precoder is disabled.

- UL-SCH indicator - 1 bit. A value of "1" indicates UL-SCH shall be transmitted on the PUSCH and a value of "0" indicates UL-SCH shall not be transmitted on the PUSCH.

(continued)

| | |
|---|---|
| | Except for DCI format 0_1 with CRC scrambled by SP-CSI-RNTI, a UE is not expected to receive a DCI format 0_1 with UL-SCH indicator of "0" and CSI request of all zero(s). |

The DCI format 1_0 may be used as the fallback DCI scheduling the PDSCH. In this case, the CRC may be scrambled by the C-RNTI. The DCI format 1_0 with the CRC scrambled by the C-RNTI may include, for example, information as shown in Table 10 below.

[Table 10]

| |
|---|
| - Identifier for DCI formats - 1 bits<br>- The value of this bit field is always set to 1, indicating a DL DCI format |
| - Frequency domain resource assignment - $\lceil log_2(N_{RB}^{DL,BWP}(N_{RB}^{DL,BWP}+1)/2)\rceil$ bits where $N_{RB}^{DL,BWP}$ is given by subclause 7.3.1.0 |
| If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows: |
| - Random Access Preamble index - 6 bits according to *ra-PreambleIndex* in Subclause 5.1.2 of [8, TS38.321] |
| - UL/SUL indicator - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved |
| - SS/PBCH index - 6 bits. If the value of the "Random Access Preamble index" is not all zeros, this field indicates the SS/PBCH that shall be used to determine the RACH occasion for the PRACH transmission; otherwise, this field is reserved. |
| - PRACH Mask index - 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved |
| - Reserved bits - 10 bits |
| Otherwise, all remaining fields are set as follows: |
| - Time domain resource assignment - 4 bits as defined in Subclause 5.1.2.1 of [6, TS 38.214] |
| - VRB-to-PRB mapping - 1 bit according to Table 7.3.1.2.2-5 |
| - Modulation and coding scheme - 5 bits as defined in Subclause 5.1.3 of [6, TS 38.214] |
| - New data indicator - 1 bit |
| - Redundancy version - 2 bits as defined in Table 7.3.1.1.1-2 |
| - HARQ process number - 4 bits |
| - Downlink assignment index - 2 bits as defined in Subclause 9.1.3 of [5, TS 38.213], as counter DAI |
| - TPC command for scheduled PUCCH - 2 bits as defined in Subclause 7.2.1 of [5, TS 38.213] |
| - PUCCH resource indicator - 3 bits as defined in Subclause 9.2.3 of [5, TS 38.213] |
| - PDSCH-to-HARQ_feedback timing indicator - 3 bits as defined in Subclause 9.2.3 of [5, TS38.213] |

DCI format 1_1 may be used as the non-fallback DCI scheduling the PDSCH. In this case, the CRC may be scrambled by the C-RNTI. The DCI format 1_1 with the CRC scrambled by the C-RNTI may include, for example, information as shown in Table 11 below.

[Table 11]

| |
|---|
| - Identifier for DCI formats - 1 bits<br>- The value of this bit field is always set to 1, indicating a DL DCI format |
| - Carrier indicator - 0 or 3 bits as defined in Subclause 10.1 of [5, TS 38.213]. |
| - Bandwidth part indicator - 0, 1 or 2 bits as determined by the number of DL BWPs $n_{BWP,RRC}$ configured by higher layers, excluding the initial DL bandwidth part. The bitwidth for this field is determined as $\lceil log_2(n_{BWP})\rceil$ bits, where |

(continued)

- $n_{BWP} = n_{BWP,RRC} + 1$ if $n_{BWP,RRC} \leq 3$, in which case the bandwidth part indicator is equivalent to the ascending order of the higher layer parameter *BWP-Id;*

- otherwise $n_{BWP} = n_{BWP,RRC}$, in which case the bandwidth part indicator is defined in Table 7.3.1.1.2-1;

If a UE does not support active BWP change via DCI, the UE ignores this bit field.

- Frequency domain resource assignment - number of bits determined by the following, where $N_{RB}^{DL,BWP}$ is the size of the active DL bandwidth part:

- $N_{RBG}$ bits if only resource allocation type 0 is configured, where $N_{RBG}$ is defined in Subclause 5.1.2.2.1 of [6, TS38.214],

- $\lceil log_2(N_{RB}^{DL,BWP}(N_{RB}^{DL,BWP}+1)/2)\rceil$bits if only resource allocation type 1 is configured, or

- $max(\lceil log_2(N_{RB}^{DL,BWP}(N_{RB}^{DL,BWP}+1)/2)\rceil, N_{RBG})+1$ bits if both resource allocation type 0 and 1 are configured.

- If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

- For resource allocation type 0, the $N_{RBG}$ LSBs provide the resource allocation as defined in Subclause 5.1.2.2.1 of [6, TS 38.214].

- For resource allocation type 1, the $\lceil log_2(N_{RB}^{DL,BWP}(N_{RB}^{DL,BWP}+1)/2)\rceil$ LSBs provide the resource allocation as defined in Subclause 5.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 5.1.2.1 of [6, TS 38.214]. The bitwidth for this field is determined as $\lceil log_2(I)\rceil$bits, where *I* is the number of entries in the higher layer parameter *pdsch-TimeDomainAllocationList* if the higher layer parameter is configured; otherwise *I* is the number of entries in the default table.

- VRB-to-PRB mapping - 0 or 1 bit:

- 0 bit if only resource allocation type 0 is configured or if interleaved VRB-to-PRB mapping is not configured by high layers;

- 1 bit according to Table 7.3.1.2.2-5 otherwise, only applicable to resource allocation type 1, as defined in Subclause 7.3.1.6 of [4, TS 38.211].

- PRB bundling size indicator - 0 bit if the higher layer parameter *prb-Bundling Type* is not configured or is set to 'static', or 1 bit if the higher layer parameter *prb-BundlingType* is set to 'dynamic' according to Subclause 5.1.2.3 of [6, TS 38.214].

- Rate matching indicator - 0, 1, or 2 bits according to higher layer parameters *rateMatchPatternGroup1* and *rateMatchPatternGroup2,* where the MSB is used to indicate *rateMatchPatternGroup1* and the LSB is used to indicate *rateMatchPatternGroup2* when there are two groups.

- ZP CSI-RS trigger - 0, 1, or 2 bits as defined in Subclause 5.1.4.2 of [6, TS 38.214]. The bitwidth for this field is determined as $\lceil log_2(n_{ZP}+1)\rceil$bits, where $n_{ZP}$ is the number of aperiodic ZP CSI-RS resource sets configured by higher layer.

For transport block 1:

- Modulation and coding scheme - 5 bits as defined in Subclause 5.1.3.1 of [6, TS 38.214]
- New data indicator - 1 bit
- Redundancy version - 2 bits as defined in Table 7.3.1.1.1-2

For transport block 2 (only present if *maxNrofCodeWordsScheduledByDCI* equals 2):

- Modulation and coding scheme - 5 bits as defined in Subclause 5.1.3.1 of [6, TS 38.214]
- New data indicator - 1 bit
- Redundancy version - 2 bits as defined in Table 7.3.1.1.1-2

(continued)

If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number - 4 bits

- Downlink assignment index - number of bits as defined in the following

  - 4 bits if more than one serving cell are configured in the DL and the higher layer parameter *pdsch-HARQ-ACK-Codebook=dynamic,* where the 2 MSB bits are the counter DAI and the 2 LSB bits are the total DAI;

  - 2 bits if only one serving cell is configured in the DL and the higher layer parameter *pdsch-HARQ-ACK-Codebook=dynamic,* where the 2 bits are the counter DAI;

  - 0 bits otherwise.

- TPC command for scheduled PUCCH - 2 bits as defined in Subclause 7.2.1 of [5, TS 38.213]

- PUCCH resource indicator - 3 bits as defined in Subclause 9.2.3 of [5, TS 38.213]

- PDSCN-to-HARQ_feedback timing indicator - 0, 1, 2, or 3 bits as defined in Subclause 9.2.3 of [5, TS 38.213]. The bitwidth for this field is determined as

$$\lceil log_2(I) \rceil$$

bits, where *I* is the number of entries in the higher layer parameter *dl-DataToUL-ACK.*

- Antenna port(s) - 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports $\{p_{0,...,}p_{\upsilon-1}\}$ shall be determined according to the ordering of DMRS port(s) given by Tables 7.3.1.2.2-1/2/3/4.

  If a UE is configured with both *dmrs-DownlinkForPDSCH-MappingTypeA* and *dmrs-DownlinkForPDSCH-MappingTypeB,* the bitwidth of this field equals $max\{x_A,x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB.* A number of $|x_A - x_B|$ zeros are padded in the MSB of this field, if the mapping type of the PDSCH corresponds to the smaller value of $x_A$ and $x_B$.

- Transmission configuration indication - 0 bit if higher layer parameter *tci-PresentInDCI* is not enabled; otherwise 3 bits as defined in Subclause 5.1.5 of [6, TS38.214].

  If "Bandwidth part indicator" field indicates a bandwidth part other than the active bandwidth part,

  - if the higher layer parameter *tci-PresentInDCI* is not enabled for the CORESET used for the PDCCH carrying the DCI format 1_1,

    - the UE assumes *tci-PresentInDCI* is not enabled for all CORESETs in the indicated bandwidth part;

  - otherwise,

    - the UE assumes *tci-PresentInDCI* is enabled for all CORESETs in the indicated bandwidth part.

- SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CBG transmission information (CBGTI) - 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH.

- CBG flushing out information (CBGFI) - 1 bit if higher layer parameter *codeBlockGroupFlushindicator* is configured as "TRUE", 0 bit otherwise.

- DMRS sequence initialization - 1 bit.

As described above, in order to achieve ultra-high-speed data services reaching several Gbps in the 5G system, ultra-wide bandwidth signal transmission and reception of tens to hundreds of MHz or several GHz may be supported. The ultra-wide bandwidth signal transmission and reception may be supported through a single component carrier (CC), or

may be supported through a carrier aggregation (CA) technology that combines multiple component carriers. When a mobile communication service provider fails to secure a frequency with sufficient bandwidth to provide ultra-high-speed data services with the single component carrier, the carrier aggregation technology may increase the total sum of the frequency bandwidth by combining each component carrier with a relatively small bandwidth size, thereby enabling the ultra-high-speed data services.

The 5G system is designed and developed for all various use cases. In addition to latency, reliability, and availability, the energy efficiency of the UE is very important in the 5G system. The 5G UE should be charged on a weekly or daily basis depending on a usage time of an individual, and typically consume tens of mW in an RRC_IDLE/RRC_INACTIVE state and hundreds of mW in an RRC_CONNECTED state. Designing to extend battery life is essential not only for providing a better user experience but also for improving energy efficiency. The energy efficiency is even more important for UEs that do not have a continuous energy source, such as UEs using small rechargeable and single coin cell batteries. Among the 5G use cases, a sensor and an actuator will be widely arranged for monitoring, measuring, charging, etc. Generally, most batteries are non-rechargeable, which is expected to last for at least several years. In addition, examples of wearables include smartwatches, rings, an eHealth-related devices, medical monitoring devices, etc., and are generally difficult to last for up to 1-2 weeks depending on the usage time.

According an embodiment, the power consumption of the 5G UE depends on configured durations of wake-up periods, e.g., paging cycles, and is expected to use an extended discontinuous reception (eDRX) cycle with high values to meet battery life requirements. However, the eDRX scheme relies on high latency to maintain long battery life, making it unsuitable for services requiring low latency. For example, in a fire detection and extinguishment use case, a fire shutter should be closed and a sprinkler should be turned on, by the actuator within 1-2 seconds from the time when a fire is detected by the sensor. In other words, the latency is an important use case. Therefore, since a long eDRX cycle as before may not meet the latency requirements, the eDRX is not suitable for such cases.

According to an embodiment, the 5G UE may need to wake-up periodically once per eDRX cycle, which may dominate the power consumption during a period of no signaling or data traffic. If the UE may wake up only when triggered like paging, it would be possible to drastically reduce power consumption. As illustrated in FIG. 5, this may be achieved by a method for triggering a main radio (the legacy NR radio) using a wake-up signal (WUS) and to turn on the main radio using a wake-up receiver (WUR), as a separate receiver, which may monitor the WUS with ultra-low power only when the data transmission and reception are required.

For example, when a gNB transmits a WUS 501 indicating ON or OFF to the UE, the UE receives the WUS using the WUR 502. The UE triggers (503) a main radio 504 in an OFF or ON state depending on whether the received WUS 501 indicates ON or OFF, and configures the main radio 504 to a wake-up state or a power-off state, respectively. In some cases, the UE may also configure the main radio 504 to a deep sleep state without completely turning off the main radio 504. When data traffic 505 to be transmitted from the gNB to the UE is generated and the WUS indicating ON is transmitted, the main radio 506 is in an ON state and the UE receives the data transmitted by the gNB through the main radio, not the WUR. Since the power consumption for monitoring the WUS relies on a hardware module of the WUS design and the WUR used for signal detection and processing, the benefits are expected to be maximized especially for power-sensitive and small form factor devices, including IoT use cases (such as industrial sensors and controllers) and wearables.

Hereinafter, a method for reducing reception delay of a UE having a wake-up receiver proposed in the present disclosure will be described with reference to specific embodiments.

<First Embodiment>

A first embodiment describes a user equipment (UE) procedure of a UE having a wake-up receiver and the legacy UE in one i-DRX cycle for paging occasion (PO) reception.

RRC_IDLE UEs will all have the same default iDRX cycle when eDRX is not configured, while RRC_INACTIVE UEs may configure UE specific DRX values through configuration in an RRC or a higher layer. In the present embodiment, for description, it is assumed that all RRC_IDLE/INACTIVE UEs have the same iDRX cycle, but it should be noted that the above assumption does not limit the scope of the present disclosure.

In order to reduce paging overhead, each UE may be grouped by its unique UE_ID or other commonality. In this process, the gNB wakes up UEs of a specific group through group paging, and UEs belonging to the corresponding group may identify the PO. However, since the UEs, which do not belong to the corresponding group, also may not know whether the group paging is for the UEs belonging to the corresponding group, the UEs cannot help but identify the PO.

With the introduction of a paging early indicator (PEI), each group may identify whether the paging is identified through the PEI. For example, when '1' is indicated in a paging indication field of the PEI received by the UE, the UE may receive the PO after matching additional downlink synchronization through an SSB burst, and when '0' is indicated in the paging indication field of the PEI received by the UE, the UE may immediately transition to a power reduction state (various sleep modes).

FIG. 6 is a diagram illustrating timelines for a not paged group and a paged group of a 5G UE.

When a DRX cycle starts, a UE in a sleep mode wakes up and receives an SSB burst 610 transmitted periodically to match downlink synchronization with the gNB. Here, each UE performs signal measurement to identify whether reception sensitivity from a serving cell is good, and when the corresponding measured value is less than or equal to a certain threshold, intra-frequency is measured. The UE that has achieved downlink synchronization through the SSB burst 610 identifies whether the UE has received a PO 613 through a PEI 614. A group in which the value indicated in the paging indication field of the PEI is '0' is a not paged group 601, and a group in which the value indicated in the paging indication field of the PEI is '1' belongs to a paged group 602. The UEs belonging to the paged group 602 may receive additional SSB bursts 611 and 612 to match a more precise frequency offset for PDSCH decoding within the PO. In this case, the number of SSB bursts may change depending on the situation, and although it was described assuming that the number of SSB bursts is two in FIG. 6, this does not limit the scope of the present disclosure. Thereafter, the UEs belonging to the paged group 602 receive the PO 613, measure the inter-frequency through an SMTC 615, and then enter the sleep mode again. On the other hand, the UEs belonging to the not paged group 601 measure only the inter-frequency through the SMTC 615 without receiving the PO 613.

FIG. 7 is a diagram illustrating timelines for the not paged group and the paged group of the UE having the wake-up receiver (WUR).

Unlike the legacy UE of FIG. 6, the UE having the wake-up receiver additionally has wake-up radio (low power wake-up radio (LR)) in addition to main radio (MR). Due to LR 703, MR 704 may maintain a deeper sleep mode than the legacy UE of FIG. 6, and a WUS 706 replaces the PEI 614 to notify whether a PO 712 is received. However, when the MR 704 wakes up from a deep sleep mode, it assumes that the memory of the UE has also been powered off, a significant amount of energy is required for a large ramp-up, as in (710). Since (710) has very high power consumption and long duration, low power design of the LR 703 is essential considering this aspect. In the present embodiment, it is assumed that the LR 703 is always on (705), but the environment may also be assumed that the LR 703 is turned on only in a specific situation such as an MR state and LR specific DRX.

When the UE receives the WUS 706, the LR triggers the MR to wake up, and since frequency synchronization fluctuates more than the legacy UEs of FIG. 6 after ramp-up of (710), the SSB bursts required for the downlink synchronization with the gNB are additionally received (711). Subsequent operations for the not paged group 701 and the paged group 702 are the same as FIG. 6.

<Second Embodiment>

A second embodiment describes a user equipment (UE) procedure of a UE having a wake-up receiver and the legacy UE in one e-DRX cycle for PO reception.

For RRC_IDLE/INACTIVE UEs, when the eDRX is configured to a duration of 1024 radio frames or less, the same timelines and UE procedures as the iDRX described in the first embodiment are performed. On the other hand, when the eDRX is configured to a duration of 1024 radio frames or more, the following timelines and UE procedures are performed.

FIG. 8 is a diagram illustrating a timeline of a 5G UE in a situation where the eDRX is configured to the duration of 1024 radio frames or more.

When an eDRX cycle 801 is configured for the 5G UE, a paging time window (PTW) is configured based on an ID of a UE, i.e., UE_ID. Therefore, one eDRX cycle 801 may be divided into a PTW interval 802 that identifies paging and a sleep interval 803 that does not identify the paging. The PTW interval 802 is composed of several iDRX cycles 804 and 805, and the same timelines and UE procedures as the iDRX of the first embodiment may be performed within intervals of each iDRX cycles 804 and 805. In the example of FIG. 8, it is illustrated that the paging is not performed in the iDRX cycle 804 and traffic is generated (810) in an iDRX cycle between the iDRX cycle 804 and another iDRX cycle 805. In this case, the gNB transmits paging in the next iDRX cycle 805 in which traffic is generated for the corresponding UE or UE group, and the UE identifies a paging indication field of the PEI to confirm that '1' is indicated and receives the PO. Therefore, latency 811 occurs by the time between the traffic generation (810) and the PO. On the other hand, there is also a case in which the traffic is generated (812) after the PTW. In this case, since the traffic is generated while the UE operates in the sleep mode 803, the UE receives paging in the iDRX cycle 806 within the next PTW. Therefore, a long latency 813 occurs as long as the time between the PO and the traffic generation (812) within the iDRX cycle 806. This means that the longer the interval during which the UE operates in the sleep mode 803, the greater the delay time.

FIG. 9 is a diagram illustrating the timeline of the UE having the wake-up receiver in the situation where the eDRX is configured to the duration of 1024 radio frames or more.

When an eDRX cycle 901 is configured for the UE having the wake-up receiver, a PTW 902 is configured based on the UE_ID, like the 5G UE. The eDRX cycle is divided into the PTW interval 902 and a sleep interval 903, and the UE may perform measurement without identifying the PO within the iDRX cycles 904 and 905 within the PTW. In the present embodiment, it is assumed that the wake-up signal completely replaces the PEI, and depending on the UE implementation or operation, the PO may be received within the PTW, like the 5G UE. In the example of FIG. 9, the situation where the paging is not performed in the iDRX cycle 904 is illustrated, and the traffic is generated in the iDRX cycle between the iDRX

cycle 904 and another iDRX cycle 905, so the gNB transmits a wake-up signal 911. When the UE receives the wake-up signal 911 from LR 920, the UE triggers MR 921 to wake up and receives the PO in the iDRX cycle 905. In the example of FIG. 9, the case where the LR 920 is always on 910 is described as an example, but does not limit the scope of the present disclosure. That is, similar to the first embodiment, the LR 920 can be turned On/Off depending on the situation. Similar to 811 of FIG. 8, latency 912 may occur from receiving the WUS 911 to receiving the PO in the iDRX cycle 905. Next, the case where the LR 920 receives a WUS 913 after the PTW 902 will be described. In the case of the UE having the eDRX configured, the paging is received in the PTW in the same way as the 5G UE because the delay time is less restricted than that of the UE having the iDRX configured in order to reduce power consumption. Therefore, after receiving the WUS, the PO is received in the iDRX cycle 906 within the PTW, and latency 914 may occur similarly to 813 of FIG. 8.

<Third Embodiment>

A third embodiment describes UE procedures of a UE having a wake-up receiver and a legacy UE in one e-DRX cycle for PO reception when data requiring low-latency reception is generated.

FIG. 10 is a diagram illustrating the timeline of the UE having the wake-up receiver when the data requiring the low-latency reception is generated in a situation where the eDRX is configured to a duration of 1024 radio frames or more.

When an eDRX cycle 1001 is configured for the UE having the wake-up receiver, a PTW 1002 is configured based on the UE_ID, like the 5G UE. The eDRX cycle is divided into the PTW interval 1002 and a sleep interval, and the UE may perform measurement without identifying the PO within the iDRX cycles 1004 and 1005 within the PTW. In the present embodiment, it is assumed that the wake-up signal completely replaces the PEI, and depending on the UE implementation or operation, the PO may be received within the PTW, like the 5G UE. In the example of FIG. 10, the situation where the paging is not performed in the iDRX cycle 1004 is illustrated, and the traffic is generated in the iDRX cycle between the iDRX cycle 1004 and another iDRX cycle 1005, so the gNB transmits a wake-up signal 1011. When the UE receives a wake-up signal 1011 from LR 1020, the UE triggers MR 1021 to wake up the MR 1021 and receives the PO in the iDRX cycle 1005. In the example of FIG. 10, the case where the LR 1020 is always on 1010 is described as an example, but does not limit the scope of the present disclosure. That is, similar to the first embodiment, the LR 1020 can be turned On/Off depending on the situation. Similar to 811 of FIG. 8 or 912 of FIG. 9, latency 1012 may occur in the WUS 1011 and the iDRX cycle 1005. Next, the case where the LR 1020 receives a WUS 1013 after the PTW 1002 will be described. In the case of a general paging message such as a system message change, the UE having the wake-up receiver as illustrated in FIG. 9 may receive the paging in the iDRX cycle 1005 within the next PTW. However, in the case where data requiring low-latency reception is generated, when the UE having the wake-up receiver receives the wake-up signal 1013 outside the PTW 1002, waking up from a sleep mode to receive the paging provides an advantage in terms of reception delay time. Therefore, a latency 1014 is very short compared to a latency 914.

In order for the UE operation to be executed when the data requiring the low-latency reception is generated, the gNB needs to transmit, to the UE, signaling requesting fast reception because the data requiring the low-latency reception has been generated. Accordingly, the UE operation according to the signaling needs to be defined.

When the UE having the wake-up receiver is in an RRC_CONNECTED mode, parameters for the wake-up signal may be configured through an RRC message. Alternatively, parameters for the wake-up signal may be configured for the UEs in an RRC _IDLE/INACTIVE mode through the SIB. In addition, similar parameters may be configured through other higher layers.

The parameters for the low-latency related wake-up signal described above may follow the definitions as shown in Table 12 below.

[Table 12]

```
LPWUS-Patameters ::=          SEQUENCE {
    ...
    maxK3-SchedulingValidity           INTEGER(1..5)
   ...
}
```

maxK3-SchedulingValidity implicitly indicates that the data requiring the low-latency reception may be generated, and when an indication for a low-latency reception mode is generated, it is notified that the UE having the wake-up receiver should receive the indication within the maxK3-SchedulingValidity, i.e., $K_{3,max}$. The setting value may be necessary from the perspective of the gNB because it may take a long time to accurately match the ramp-up and the

downlink synchronization based on the UE capability. In addition, a default value of the maxK3-SchedulingValidity, i.e., $K_{3,max}$ may be defined in preparation for the case where the RRC or SIB is not configured. Here, the default value may be configured not to exceed one paging frame. When $K_{3,max}$ is configured through both the RRC or SIB, the value configured in the SIB, which may be received more dynamically, may be prioritized.

When the low-latency data is generated, the gNB may indicate the number $K_3$ of POs actually transmitted within the above-defined $K_{3,max}$ to the UE having the wake-up receiver. $K_3$ ($\leq K_{3,max}$) is configured from a minimum of one PO up to $K_{3,max}$ POs, and the gNB continuously transmits the same paging message up to $K_3$ times to a UE requiring low-latency data reception. Therefore, the corresponding UE may receive the corresponding data within $K_3$ POs.

FIG. 11 is a diagram illustrating timelines of the gNB, the legacy UE, and the UE having the wake-up receiver that indicate a low-latency mode through the wake-up signal when the data requiring the low-latency reception is generated in the situation where the eDRX is configured to the duration of 1024 radio frames or more.

The UE having the wake-up receiver and a legacy 5G UE 1123 may start the eDRX cycle and the PTW at different starting locations according to the UE_ID. The UE having the wake-up receiver has an eDRX cycle 1101 and a PTW interval 1103 within the eDRX cycle. On the other hand, the legacy 5G UE 1123 has an eDRX cycle 1102 and a PTW interval 1104. That is, the PTW interval 1104 of the legacy 5G UE 1123 is configured after the PTW interval 1103 of the UE having the wake-up receiver. When the low-latency data is generated after the PTW interval 1103 of the UE having the wake-up receiver, a gNB 1120 may transmit a wake-up signal 1104 with information of $K_3$ = 2. That is, since the low-latency data is generated, the gNB transmits paging for the corresponding UE during next two POs. The UE having the wake-up receiver receives a wake-up signal 1105 through LR 1121 and triggers MR 1121 to wake up. The MR 1121 wakes up to perform a paging reception procedure, and receives the PO within an iDRX cycle 1106 in which the corresponding paging is present. The latency at this time corresponds to the latency 1107. Additionally, the gNB 1120 may configure other UEs for which the PTW is configured during two POs to skip PO monitoring by indicating paging indication fields of two PEIs 1108 and 1109 as ’0’. As illustrated in FIG. 11, when the UE having the wake-up receiver receives the paging indication field ’0’ in a first PO, the UE may immediately transition to the sleep mode to prevent additional power loss.

FIG. 11 is an example assuming that $K_3$ is configured through LP-WUS, and may explicitly configure $K_3$ through ceil($\log_2(K_{3,max})$) bits in the wake-up signal. When the wake-up signal is transmitted based on a sequence, a special sequence may be transmitted to notify that low-latency data different from the general case as illustrated in FIG. 9 is transmitted. The UE having the wake-up receiver that receives this special sequence operates in the low-latency mode as illustrated in FIG. 11. Of course, in this case, since information about $K_3$ is not included, $K_3$ of a pre-configured default value may be applied and thus the UE may operate in the low-latency mode.

FIG. 12 is a diagram illustrating the timelines of the gNB, the legacy UE, and the UE having the wake-up receiver in which the parameters for the low-latency mode are configured through the DCI when the data requiring the low-latency reception is generated in the situation where the eDRX is configured to the duration of 1024 radio frames or more.

The UE having the wake-up receiver and a legacy 5G UE 1223 may start the eDRX cycle and the PTW at different starting locations according to the UE_ID. The UE having the wake-up receiver has an eDRX cycle 1201 and a PTW interval 1203 within the eDRX cycle. On the other hand, the legacy 5G UE 1223 has an eDRX cycle 1202 and a PTW interval 1204. That is, the PTW interval 1204 of the legacy 5G UE 1223 is configured after the PTW interval 1203 of the UE having the wake-up receiver. In the previous PTW interval 1203, the UE having the wake-up receiver may identify at least one PO to be pre-configured a $K_3$ value in advance when the low-latency mode is triggered through the DCI. The DCI for this may be indicated, for example, through DCI format 1_0 CRC-scrambled by P-RNTI, or through a reserved bit of DCI format 2_7 (PEI), or may be indicated in a separate DCI format.

The DCI format 1_0 is scrambled by various types of RNTIs such as C-RNTI, SI-RNTI, RA-RNTI, and MsgB-RNTI. Among them, the DCI format 1_0 scrambled with the P-RNTI is as shown in Table 13.

[Table 13]

| Field | bits | Note |
|---|---|---|
| Short Messages Indicator | 2 | |
| Short Messages | 8 | |
| Frequency domain resource assignment | $\lceil log_2(N_{RB}^{DL,BWP}(N_{RB}^{DL,BWP}+1)/2)\rceil$ | * |
| Time domain resource assignment | 4 | * |
| VRB-to-PRB mapping | 1 | * |
| Modulation and coding scheme | 5 | * |
| TB scaling | 2 | * |
| TRS availability indication | M=0~6 | ** |

(continued)

| Field | bits | Note |
|---|---|---|
| Reserved bits | (8-M) or (6-M) | *** |
| * If only the short message is carried, this bit field is reserved<br>** M = 1 ~ 6 bits (if TRS-ResourceSetConfig is configured), 0 (otherwise)<br>*** with spectrum sharing or without spectrum sharing | | |

Here, $N_{RB}^{DL,BWP}$ is a size of CORESET 0. A short messages indicator in a first row is 2 bits of information, and serves to indicate whether the short messages indicator is short message information, paging information, or both of them, as shown in Table 14.

[Table 14]

| Bit field | Short Message indicator |
|---|---|
| 00 | Reserved |
| 01 | Only scheduling information for Paging is present in the DCI |
| 10 | Only short message is present in the DCI |
| 11 | Both scheduling information for Paging and short message are present in the DCI |

Here, the short message includes information related to changes in system information or disasters, as shown in Table 15.

[Table 15]

| Bit | Short Message |
|---|---|
| 1 | ***systemInfoModification*** |
| 2 | ***etwsAndCmasIndication*** |
| 3 | ***stopPagingMonitoring*** |
| 4 | ***systemInfoModification-eDRX*** |
| **5 - 8** | Not used in this release of the specification, and shall be ignored by UE if received. |

Therefore, there are a large number of reserved bits, and especially in the case where only short messages are transmitted through a first note in Table 13 (i.e., short message indicator = '10'), all bits in a row marked by * are changed to the reserved bits, so parameters for the low-latency mode may be configured through the reserved bits.

The following embodiments may be used depending on the situation.

- Reuse of short message of 5 to 8 bits

  ■ Since 5th to 8th bits for short message are reserved as shown in Table 15, these bits may be used as the parameters for the low-latency mode. For example, the $K_3$ value may be configured by using ceil($\log_2(K_{3,max})$) bits among 4 bits.

  ■ Of course, when the short message indicator is configured to '01', all the short messages are reserved, so the $K_3$ value may be configured by using all 8 bits.

- Reuse of reserved bits

  ■ A field for reserved bits other than the short message indicator and the short message field is a method for using only reserved bits of 6-M bits of *** in Table 13, or configuring short message indicator='10' to reserve all fields of * including frequency domain resource assignment (FDRA) bits and use all the fields as $K_3$. In the former case, since the number of available bits is not large, $K_{3,max}$ may be configured and operated when $K_{3,max}$ is small, while in the latter case, since the number of expressible bits is large, $K_{3,max}$ may be operated even when $K_{3,max}$ is

sufficiently large.

DCI format 2_7 serves to indicate the PEI and TRS availability indication. It is necessary to avoid affecting the legacy UE during this process. Therefore, a maxDCI-2-7-Size-r17 value may be configured to be large to secure additional reserved bits in addition to the total number of bits for the PEI and TRS availability indication. In the case of the legacy UE, the previous information of the PEI is received by the RRC configuration. Here, pei-FrameOffset information about how many frames after a first paging frame the PEI will be transmitted and a symbol offset after the corresponding frame offset are configured to firstPDCCH-MonitoringOccasionOfthe PEI-O, so the legacy UE may know the location of the PEI and TRS availability indication regardless of maxDCI-2-7-Size-r17. Therefore, when the maxDCI-2-7-Size-r17 is larger the sum of the PEI, TRS availability indication, and CRC, the maxDCI-2-7-Size-r17 may be used as the reserved bit. Therefore, each gNB may flexibly configure the maxDCI-2-7-Size-r17 depending on the size of $K_{3,max}$ and indicate the $K_3$ value.

The UE having the wake-up receiver may store the $K_3$ value obtained through the DCI, and when the low-latency data is generated after the PTW interval 1203, the gNB 1220 may transmit the wake-up signal 1204. That is, since the low-latency data is generated, the gNB may transmit the paging for the UE during the next $K_3$ PO. The UE having the wake-up receiver receives a wake-up signal 1205 through LR 1221 and triggers MR 1221 to wake up. The MR 1221 wakes up to perform a paging reception procedure, and receives the PO within an iDRX cycle 1206 in which the corresponding paging is present. The latency at this time corresponds to the latency 1207. Additionally, the gNB 1220 may configure other UEs for which the PTW is configured during two POs to skip PO monitoring by indicating paging indication fields of two PEIs 1208 and 1209 as '0'.

The $K_3$ value has a short validity period, so a fallback mode is required when the $K_3$ value is outdated. In particular, when the $K_3$ value is configured by the DCI, there may be the case where the $K_3$ value may not be updated in the immediately previous PTW. Therefore, when the $K_3$ value has not been updated for a certain period of time, the pre-specified value may be used, or the default value for $K_3$ may be used.

FIG. 13 is a diagram illustrating a procedure for UE assistance information (UAI).

A gNB 1302 may also transmit an unnecessary PO because it may take a long time to accurately match the ramp-up and the downlink synchronization. In FIG. 13, a UE 1301 may transmit a special RRC message (UEAssistanceInformation) (1320) that may notify the gNB 1302 of various internal states so that the UE 1301 may allocate/control resources that are better suited to a specific moment of each UE after RRCReconfiguration (1310). The UE 1301 may transmit a maximum BW size, DRX preference, the maximum number of MIMO layers, the minimum number of offset slots for cross slot scheduling, etc., through the UEAssistanceInformation as shown in Table 16 below.

[Table 16]

```
UEAssistanceInformation-v1610-IEs ::= SEQUENCE {
    idc-Assistance-r16                     IDC-Assistance-r16 OPTIONAL,
    drx-Preference-r16                     DRX-Preference-r16 OPTIONAL,
    maxBW-Preference-r16                   MaxBW-Preference-r16 OPTIONAL,
    maxCC-Preference-r16                   MaxCC-Preference-r16 OPTIONAL,
    maxMIMO-LayerPreference-r16            MaxMIMO-LayerPreference-r16 OPTIONAL,
    minSchedulingOffsetPreference-r16      MinSchedulingOffsetPreference-r16 OPTIONAL,
    releasePreference-r16                  ReleasePreference-r16 OPTIONAL,
    sl-UE-AssistanceInformationNR-r16      SL-UE-AssistanceInformationNR-r16
OPTIONAL,
    referenceTimeInfoPreference-r16        BOOLEAN OPTIONAL,
    nonCriticalExtension SEQUENCE {} OPTIONAL
}
```

Therefore, when the UE with the wake-up receiver is in the RRC connection, if a time $t_3$ required to accurately match the ramp-up and the downlink synchronization is transmitted in advance, The gNB can transmit the PO

$\lfloor K_3 - t_3 \rfloor$ times instead of repeated transmitting the PO $k_3$ times, based on $t_3$. In addition to the UAI, the UE may also transfer UE's preference through the UE capability information report in step 420.

<Fourth Embodiment>

A fourth embodiment describes a procedure for transitioning from an eDRX cycle to an iDRX cycle for PO reception when data requiring low-latency reception is continuously generated in a UE having a wake-up receiver.

The third embodiment described a case where the UE having the wake-up receiver configured with the eDRX cycle generates data requiring low-latency reception only at a specific time. According to the third embodiment, the UE enters a sleep mode until the next PTW after receiving paging, and maintains the eDRX cycle. However, when the data requiring the low-latency reception is continuously generated, the corresponding UE may need to transition to the iDRX and receive the paging.

When the UE having the wake-up receiver is in an RRC_CONNECTED mode, parameters for the wake-up signal may be configured through an RRC message. Alternatively, the parameters may be configured for UEs in an RRC_IDLE/INACTIVE mode through an SIB. In addition, similar parameters may be configured through other higher layers.

The parameters for the low-latency related wake-up signal described above may follow the definitions as shown in Table 17 below.

[Table 17]

```
LPWUS-Patameters ::=          SEQUENCE {
    ...
    DRXmodeSwitch                 SEQUENCE {
        defaultPagingCycle        PagingCycle,
        applicationDelay          INTEGER (0.. K4)
    }
    ...
}
```

DRXmodeSwitch implicitly notifies that the data requiring the low-latency reception may be generated, and the UE may change defaultPagingCycle when an indication for the low-latency reception mode is generated. That is, the UE having the wake-up receiver may change to the default paging cycle and operate as in the first embodiment. Additionally, applicationDelay is an application delay time required to transition from a current DRX cycle to the changed paging cycle. As illustrated in the example in Table 17, the UE transitions to the changed paging cycle after 0 to $K_4$ paging frames according to the applicationDelay.

Similar to the third embodiment, parameters for low-latency-related wake-up signals may be indicated through a wake-up signal or DCI. Of course, the parameters may also be applied using values configured by an RRC message in an RRC_CONNECTED mode. In addition, default values for each parameter may be pre-configured considering a fallback mode. The related indication information has only a difference in the number of configured bits, and all procedures are the same as in <Third Embodiment>.

<Fifth Embodiment>

A fifth embodiment describes that a UE having a wake-up receiver configures a TRS burst for PO reception when data requiring low-latency reception is generated and the UE operates accordingly.

FIG. 14 is a diagram illustrating a timeline in which a paged group of a 5G UE receives a TRS instead of an SSB burst before receiving a PO.

When a DRX cycle starts, a UE in a sleep mode wakes up and receives an SSB burst 1401 transmitted periodically to match downlink synchronization with a gNB. Here, each UE performs signal measurement to identify whether reception sensitivity from a serving cell is good, and when the corresponding measured value is less than or equal to a certain threshold, intra-frequency is measured. The synchronized UE identifies whether a PO 1404 is received through a PEI 1402. A group in which a value indicated in a paging indication field of the PEI is '0' is a not paged group, and a group in which the value indicated in the paging indication field of the PEI is '1' belongs to a paged group. The UEs of the group in

which the value indicated in the paging indication field of the PEI is '1' may receive a TRS 1403 instead of an additional SSB burst to match a more precise frequency offset for PDSCH decoding in the PO. In this case, the number of TRSs may be changed depending on the situation, and in FIG. 14, the number of TRSs is assumed to be 1, but does not limit the scope of the present disclosure. After receiving the TRS 1403, the UE receives the PO 1404, measures inter-frequency through an SMTC 1405, and then enters a sleep mode again.

FIG. 15 is a diagram schematically illustrating RE mapping of the TRS.

The TRS is a type of NZP CSI-RS for synchronization, and may be configured to a faster periodicity than an SSB, and may be transmitted across two slots which are slot k 1501 and slot k+1 1502, in units of four OFDM symbols and four subcarrier spacing as illustrated in FIG. 15. In some cases, the TRS may be transmitted in one slot. OFDM symbol locations for each slot may have $l \in \{4,8\}$,$l \in \{5,9\}$ or $l \in \{6,10\}$ in frequency range (FR) 1,2, and the TRS may be additionally configured in $l \in \{0,4\}$,$l \in \{1,5\}$,$l \in \{2,6\}$,$l \in \{3,7\}$,$l \in \{7,11\}$,$l \in \{8,12\}$,$l \in \{9,13\}$ OFDM symbols in FR 2.

Information about TRS resources for an RRC_DLE/INACTIVE UE may be configured through SIB17. The corresponding information is as shown in Table 18 below.

[Table 18]

```
SIB17-IEs-r17 ::= SEQUENCE {
    trs-ResouceSetConfig-r17 SEQUENCE (SIZE (1..maxNrofTRS-ResourceSets-r17)) OF TRS-ResourceSet-r17 OPTIONAL, -- Need R
    validityDuration-r17 ENUMERATED {t1, t2, t4, t8, t16, t32, t64, t128, t256, t512, spare6, spare5, spare4, spare3, spare2, spare1} OPTIONAL, -- Need S
    lateNonCriticalExtension OCTET STRING OPTIONAL,
...
}

TRS-ResourceSet-r17 ::= SEQUENCE {
    powerControlOffsetSS-r17 ENUMERATED {db-3, db0, db3, db6},
    scramblingID-Info-r17 CHOICE {
    scramblingIDforCommon-r17 ScramblingId,
    scramblingIDperResourceListWith2-r17 SEQUENCE (SIZE (2)) OF ScramblingId,
    scramblingIDperResourceListWith4-r17 SEQUENCE (SIZE (4)) OF ScramblingId,
    ...
    },
    firstOFDMSymbolInTimeDomain-r17 INTEGER (0..9),
    startingRB-r17 INTEGER (0..maxNrofPhysicalResourceBlocks-1),
    nrofRBs-r17 INTEGER (24..maxNrofPhysicalResourceBlocksPlus1),
    ssb-Index-r17 SSB-Index,
    periodicityAndOffset-r17 CHOICE {
    slots10 INTEGER (0..9),
    slots20 INTEGER (0..19),
    slots40 INTEGER (0..39),
    slots80 INTEGER (0..79)
    },
    frequencyDomainAllocation-r17 BIT STRING (SIZE (4)),
    indBitID-r17 INTEGER (0..5),
    nrofResources-r17 ENUMERATED {n2, n4},
    ...
}
```

Through TRS-ResourceSet information, each UE receives up to maxNrofTRS-ResourceSets=64 TRS configurations. For each TRS-ResourceSet, a starting OFDM symbol location, a starting RB location, the number of RBs, a QCLed SSB index, a periodicity, a frequency domain allocation information, a number corresponding to TRS availability, the number of TRS resources in one TRS resource set, etc., are defined differently. The validityDuration is a validity period of the configured TRS resource set. Here, the transmission of the TRS resource set is guaranteed up to the configured value, and is supported from at least 1 paging cycle, and the default is 2 paging cycles.

As described above, after SIB17 is configured for the UE, the gNB indicates which TRS resource set is configured through an TRS availability indication of DCI format 1_0 and DCI format 2_7 CRC-scrambled by P-RNTI mentioned above. There is no new TRS pattern or type for the RRC_IDLE/INACTIVE UE, and when the TRS is configured for a UE that is currently in the RRC_CONNECTED state in the network, the corresponding TRS resource set is configured identically for the RRC_IDLE/INACTIVE UEs. Therefore, when the TRS is not configured for the RRC_CONNECTED UE, the TRS availability indication may not be configured for the RRC_IDLE/INACTIVE UEs.

FIG. 16 is a diagram illustrating a timeline in which the paged group of the UE having the wake-up receiver receives a TRS burst instead of the SSB burst before receiving the PO.

As illustrated in FIG. 16, when the UE having the wake-up receiver receives a wake-up signal 1601, the UE is triggered to wake up the MR, and the MR receives an SSB burst 1602 that is transmitted periodically after a ramp-up time. The UE having the wake-up receiver performs serving cell signal measurement through the received SSB burst. Since the UE having the wake-up receiver wakes up from a deeper sleep mode than the legacy 5G UE, the UE receives several consecutive SSBs to match the downlink synchronization, as in (711) in Figure 7. The downlink synchronization matching process in the ramp-up is an essential process and requires a long time (540ms or longer). Since the ramp-up is hardware characteristic, it is difficult to control, but the downlink synchronization matching process may be shortened with the existing TRS resource set 1603. However, in order to apply the existing TRS resource set as it is, there should first be the RRC_CONNECTED UE to which the TRS resource set is allocated, the TRS availability indication should be indicated through the DCI, and the long validityDuration may be required. Therefore, the TRS resource set for the RRC_IDLE/-INACTIVE UEs is required to solve this problem. In addition, the configuration for the TRS for the RRC_IDLE/INACTIVE UEs can be configured to a shorter periodicity than the existing TRS, and the validityDuration may also be designed to match the corresponding downlink synchronization quickly because the validityDuration is very short. Therefore, the TRS burst in which the TRS resource set is transmitted multiple times may be configured. In this way, it is expected that the downlink synchronization may be matched by less overhead within a shorter time than (711) by using the TRS bursts allocated to the RRC_IDLE/INACTIVE UEs configured to several shorter periodicities compared to the SSB.

When the UE having the wake-up receiver is in an RRC_CONNECTED mode, parameters for the wake-up signal may be configured through an RRC message. Alternatively, the parameters may be configured for UEs in an RRC_IDLE/INACTIVE mode through an SIB. In addition, similar parameters may be configured through other higher layers.

The parameters for the TRS burst-related wake-up signal described above may follow the definitions as shown in Table 19 below.

[Table 19]

```
LPWUS-Patameters ::=          SEQUENCE {
    ...
    maxK3-SchedulingValidity             INTEGER(1..5)
    trs-Burst            Optional        TRS-Burst
   ...
}
TRS-Burst ::= SEQUENCE {
    TRS-ResourseSet    SEQUENCE ::={1,...,maxTRSResourceSet}
    gapBetweenBursts        INTEGER (2..31)
    validityDuration        Optional        ENUMERATED {5, 10, 15,...}
}
```

Through the TRS-Burst, each UE receives information about the TRS resource set that constitute the TRS burst. At least the TRS-ResourseSet may borrow the information of the same name in Table 18 as shown in Table 20 below.

[Table 20]

```
TRS-ResourceSet ::= SEQUENCE {
    powerControlOffsetSS ENUMERATED {db-3, db0, db3, db6},
    scramblingID-Info CHOICE {
    scramblingIDforCommon ScramblingId,
    scramblingIDperResourceListWith2 SEQUENCE (SIZE (2)) OF ScramblingId,
    scramblingIDperResourceListWith4 SEQUENCE (SIZE (4)) OF ScramblingId,
    ...
    },
    firstOFDMSymbolInTimeDomain INTEGER (0..9),
    startingRB INTEGER (0..maxNrofPhysicalResourceBlocks-1),
    nrofRBs INTEGER (24..maxNrofPhysicalResourceBlocksPlus1),
    ssb-Index SSB-Index,
    periodicityAndOffset CHOICE {
        slots1 INTEGER (0..1),
        slots2 INTEGER (0..2),
        slots4 INTEGER (0..4),
        slots8 INTEGER (0..8)
    },
    frequencyDomainAllocation BIT STRING (SIZE (4)),
    indBitID INTEGER (0..5),
    nrofResources ENUMERATED {n2, n4},
    ...
}
```

However, the periodicity between the TRS resources may be redefined to be short. gapBetweenBursts defines a gap between the TRS bursts, and the validityDuration is defined to be short enough for the UE having the wake-up receiver to match the downlink synchronization. Based on the corresponding information, the UE may receive the TRS burst availability indication through the wake-up signal or the DCI, similar to <Third Embodiment> or <Fourth Embodiment>. The related indication information has only a difference in the number of configured bits, and all procedures are the same as in <Third Embodiment>.

Additionally, the validityDuration may be configured as in $K_3$ of <Third Embodiment>. In this case, the UE may ignore the pre-configured validityDuration and use the $K_3$ value. Therefore, during several paging frames where $K_3$ POs are received, each UE receives the configured TRS burst to match the downlink synchronization and then receive the POs. The fallback mode is to receive the SSB burst instead of the TRS burst, as illustrated in FIG. 7. In addition, when the SIB17 is received and the TRS availability indication is indicated through the DCI, each UE may assume that the TRS burst is not separately configured in order to reduce additional overhead and receive the configured TRS resource set to match the downlink synchronization.

FIG. 17 is a diagram illustrating an example of a transceiver of a terminal in a wireless communication system according to an embodiment of the present disclosure. For convenience of description, devices that are not directly related to the present disclosure may be omitted from illustration and description.

Referring to FIG. 17, a terminal may be configured with a transmitter 1704 that includes an uplink transmission processing block 1701, a multiplexer 1702, and a transmission RF block 1703, a receiver 1708 that includes a downlink reception processing block 1705, a demultiplexer 1706, and a reception RF block 1707, and a controller 1709. As described above, the controller 1709 may control each of the configuration blocks of the receiver 1708 for receiving a data channel or a control channel transmitted by a base station and each of the configuration blocks of the transmitter 1704 for transmitting an uplink signal.

In the transmitter 1704 of the terminal, the uplink transmission processing block 1701 may generate a signal to be transmitted by performing processes such as channel coding and modulation. The signal generated in the uplink

transmission processing block 1701 may be multiplexed with another uplink signal by the multiplexer 1702, and then transmitted to the base station after the signal processing in the transmission RF block 1703.

The receiver 1708 of the terminal demultiplexes the signal received from the base station and distributes the demultiplexed signal to each downlink reception processing block. The downlink reception processing block 1705 may perform processes, such as demodulation and channel decoding, on the downlink signal of the base station to acquire the control information or data transmitted by the base station. The receiver 1708 of the terminal may support the operation of the controller 1709 by applying the output result of the downlink reception processing block to the controller 1709.

FIG. 18 is a block diagram illustrating an example of a configuration of a terminal according to an embodiment of the present disclosure.

As illustrated in FIG. 18, the terminal according to the present embodiment may include a processor 1830, a transceiver 1810, and a memory 1820. However, the components of the terminal are not limited to the above-described examples. For example, the terminal may include more or fewer components than the above-described components. In addition, the processor 1830, the transceiver 1810, and the memory 1820 may be implemented in the form of a single chip. According to an embodiment, the transceiver 1810 of FIG. 18 may include the transmitter 1704 and the receiver 1708 of FIG. 17. In addition, the processor 1830 of FIG. 19 may include the controller 1709 of FIG. 17.

According to an embodiment, the processor 1830 may control a series of processes by which the terminal may operate according to the embodiment of the present disclosure described above. For example, according to an embodiment of the present disclosure, components of the terminal may be controlled to perform a transmission and reception method of the terminal according to whether the base station mode is a base station energy saving mode or a base station general mode. The number of processors 1830 may be one or more, and the processor 1830 may perform the transmission and reception operation of the terminal in the wireless communication system applying the carrier bundle of the present disclosure described above by executing the program stored in the memory 1820.

The transceiver 1810 may transmit and receive a signal to and from the base station. The signal transmitted and received to and from the base station may include control information and data. The transceiver 1810 may be composed of an RF transmitter that up-converts a frequency of the transmitted signal and amplifies the transmitted signal, an RF receiver that low-noise amplifies the received signal and down-converts a frequency of the received signal, etc. However, this is only an embodiment of the transceiver 1810, and the components of the transceiver 1810 are not limited to the RF transmitter and the RF receiver. In addition, the transceiver 1810 may receive a signal through a wireless channel, output the received signal to the processor 1830, and transmit a signal output from the processor 1830 through the wireless channel.

According to an embodiment, the memory 1820 may store the program and data necessary for the operation of the terminal. In addition, the memory 1820 may store the control information or data included in the signal transmitted and received to and from the terminal. The memory 1820 may be configured as storage media such as a ROM, a RAM, a hard disk, a CD-ROM, and a DVD, or a combination of the storage media. In addition, the number of memories 1820 may be plural. According to an embodiment, the memory 1820 may store a program for performing the transmission and reception operation of the terminal according to whether the base station mode of the embodiments of the present disclosure described above is the base station energy saving mode or the base station general mode.

FIG. 19 is a block diagram illustrating an example of a configuration of a base station according to an embodiment of the present disclosure.

As illustrated in FIG. 19, the base station according to the present embodiment may include a processor 1930, a transceiver 1910, and a memory 1920. However, the components of the base station are not limited to the above-described examples. For example, the base station may include more or fewer components than the above-described components. In addition, the processor 1930, the transceiver 1910, and the memory 1920 may be implemented in the form of a single chip.

The processor 1930 may control a series of processes so that the base station may operate according to the embodiment of the present disclosure described above. For example, according to an embodiment of the present disclosure, components of the base station may be controlled to perform a method for scheduling a terminal according to whether the base station mode is the base station energy saving mode or the base station general mode. The number of processors 1930 may be one or more, and the processor 1930 may perform the method for scheduling a terminal according to whether the base station mode of the present disclosure described above is the base station energy saving mode or the base station general mode by executing the program stored in the memory 1920.

The transceiver 1910 may transmit and receive a signal to and from the terminal. The signal transmitted and received to and from the terminal may include control information and data. The transceiver 1910 may be composed of an RF transmitter that up-converts a frequency of the transmitted signal and amplifies the transmitted signal, an RF receiver that low-noise amplifies the received signal and down-converts a frequency of the received signal, etc. However, this is only an embodiment of the transceiver 1910, and the components of the transceiver 1910 are not limited to the RF transmitter and the RF receiver. In addition, the transceiver 1910 may receive a signal through a wireless channel, output the received signal to the processor 2030, and transmit a signal output from the processor 1930 through the wireless

channel.

According to an embodiment, the memory 1920 may store the program and data necessary for the operation of the base station. In addition, the memory 1920 may store the control information or data included in the signal transmitted and received by the base station. The memory 1920 may be configured as storage media such as a ROM, a RAM, a hard disk, a CD-ROM, and a DVD, or a combination of the storage media. In addition, the number of memories 1920 may be plural. According to an embodiment, the memory 1920 may store a program for performing the method for scheduling a terminal according to whether the base station mode of the embodiments of the present disclosure described above is the base station energy saving mode or the base station general mode.

The methods according to the embodiments described in the claims or specifications of the present disclosure may be implemented in the form of hardware, software, or a combination of hardware and software.

When implemented in the software, a computer-readable storage medium storing one or more programs (software modules) may be provided. One or more programs stored in the computer-readable storage medium are configured for execution by one or more processors within an electronic device. One or more programs include instructions for causing an electronic device to execute methods according to embodiments described in a claim or specification of the present disclosure.

Such programs (software module, software) include a random access memory, a non-volatile memory including flash memory, a read only memory (ROM), an electrically erasable programmable read only memory (EEPROM), a magnetic disc storage device, a compact disc-ROM (CD-ROM), digital versatile discs (DVDs), any other form of optical storage device, and a magnetic cassette. Alternatively, the programs may be stored in a memory composed of a combination of some or all thereof. In addition, each configuration memory may be included in plurality.

In addition, the program may be stored in an attachable storage device that may accessed via a communication network such as the Internet, the Intranet, a local area network (LAN), wide LAN (WLAN), or a storage area network (SAN), or a combination thereof. Such a storage device may be connected to a device implementing an embodiment of the present disclosure through an external port. In addition, a separate storage device on the communication network may be connected to the device performing the embodiments of the present disclosure.

In the specific embodiments of the present disclosure described above, components included in the disclosure are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the component may be configured in plural.

Meanwhile, the preferred embodiment of the present disclosure has been disclosed in the present specification and diagrams, and although specific terms are used, this is merely used in a general sense to easily describe the technical contents of the present disclosure and to aid understanding of the present disclosure, but is not intended to limit the scope of the present disclosure. It is obvious to those of ordinary skill in the art to which the present disclosure pertains that other modifications based on the technical idea of the present disclosure can be practiced in addition to the embodiments disclosed herein. In addition, each embodiment may operate in combination with each other if necessary.

Meanwhile, although specific embodiments have been described in the detailed description of the present disclosure, various modifications are possible without departing from the scope of the present disclosure. Therefore, the scope of the present disclosure is not construed as being limited to the embodiments described above, but should be defined by the following claims as well as equivalents thereto.

## Claims

**1.** A method of a terminal in a communication system, comprising:

receiving information about a parameter related to a wake-up signal (WUS) from a base station;
receiving the WUS from the base station through a wake-up receiver;
triggering a main radio (MR) based on the WUS; and
receiving a paging message through the MR within $K_3$ consecutive paging occasions (POs) after receiving the WUS.

**2.** The method of claim 1, wherein the parameter related to the WUS includes a maximum value $K_{3,max}$ of the $K_3$,

the $K_3$ has a value from 1 to $K_{3,max}$, and
the $K_3$ is determined based on the WUS or downlink control information (DCI).

**3.** The method of claim 1, wherein a paging indication field within a paging early indication (PEI) for terminals associated

with the $K_3$ consecutive POs indicates 0.

**4.** The method of claim 1, further comprising:

receiving a tracking reference signal (TRS) burst after receiving the WUS,
wherein the parameter related to the WUS includes information about a TRS resource set related to the TRS burst.

**5.** A method of a base station in a communication system, comprising:

transmitting information about a parameter related to a wake-up signal (WUS) to a terminal;
transmitting the WUS to the terminal; and
transmitting a paging message to the terminal during $K_3$ consecutive paging occasions (POs) after transmitting the WUS.

**6.** The method of claim 5, wherein the parameter related to the WUS includes a maximum value $K_{3,max}$ of the $K_3$,

the $K_3$ has a value from 1 to $K_{3,max}$, and
the $K_3$ is determined based on the WUS or downlink control information (DCI).

**7.** The method of claim 5, further comprising:

transmitting a paging early indication (PEI) to terminals associated with the $K_3$ consecutive POs,
wherein a paging indication field within the PEI indicates 0.

**8.** The method of claim 5, further comprising:

transmitting a tracking reference signal (TRS) burst to the terminal after transmitting the WUS,
wherein the parameter related to the WUS includes information about a TRS resource set related to the TRS burst.

**9.** A terminal of a communication system, comprising:

a transceiver; and
a controller controlling to receive information about a parameter related to a wake-up signal (WUS) from a base station;
receive the WUS from the base station through a wake-up receiver;
trigger a main radio (MR) based on the WUS; and
receive a paging message through the MR within $K_3$ consecutive paging occasions (POs) after receiving the WUS.

**10.** The terminal of claim 9, wherein the parameter related to the WUS includes a maximum value $K_{3,max}$ of the $K_3$,

the $K_3$ has a value from 1 to $K_{3,max}$, and
the $K_3$ is determined based on the WUS or downlink control information (DCI).

**11.** The terminal of claim 9, wherein a paging indication field within a paging early indication (PEI) for terminals associated with the $K_3$ consecutive POs indicates 0.

**12.** The terminal of claim 9, wherein the controller further controls to receive a tracking reference signal (TRS) burst after receiving the WUS, and
the parameter related to the WUS includes information about a TRS resource set related to the TRS burst.

**13.** A base station of a communication system, comprising:

a transceiver; and
a controller controlling to transmit information about a parameter related to a wake-up signal (WUS) to a terminal;
transmit the WUS to the terminal, and

transmit a paging message to the terminal during $K_3$ consecutive paging occasions (POs) after transmitting the WUS.

**14.** The base station of claim 13, wherein the parameter related to the WUS includes a maximum value $K_{3,max}$ of the $K_3$,

the $K_3$ has a value from 1 to $K_{3,max}$, and
the $K_3$ is determined based on the WUS or downlink control information (DCI).

**15.** The base station of claim 13, wherein the controller further controls to transmit a paging early indication (PEI) to terminals associated with the $K_3$ consecutive POs, and
a paging indication field within the PEI indicates 0.

FIG. 1

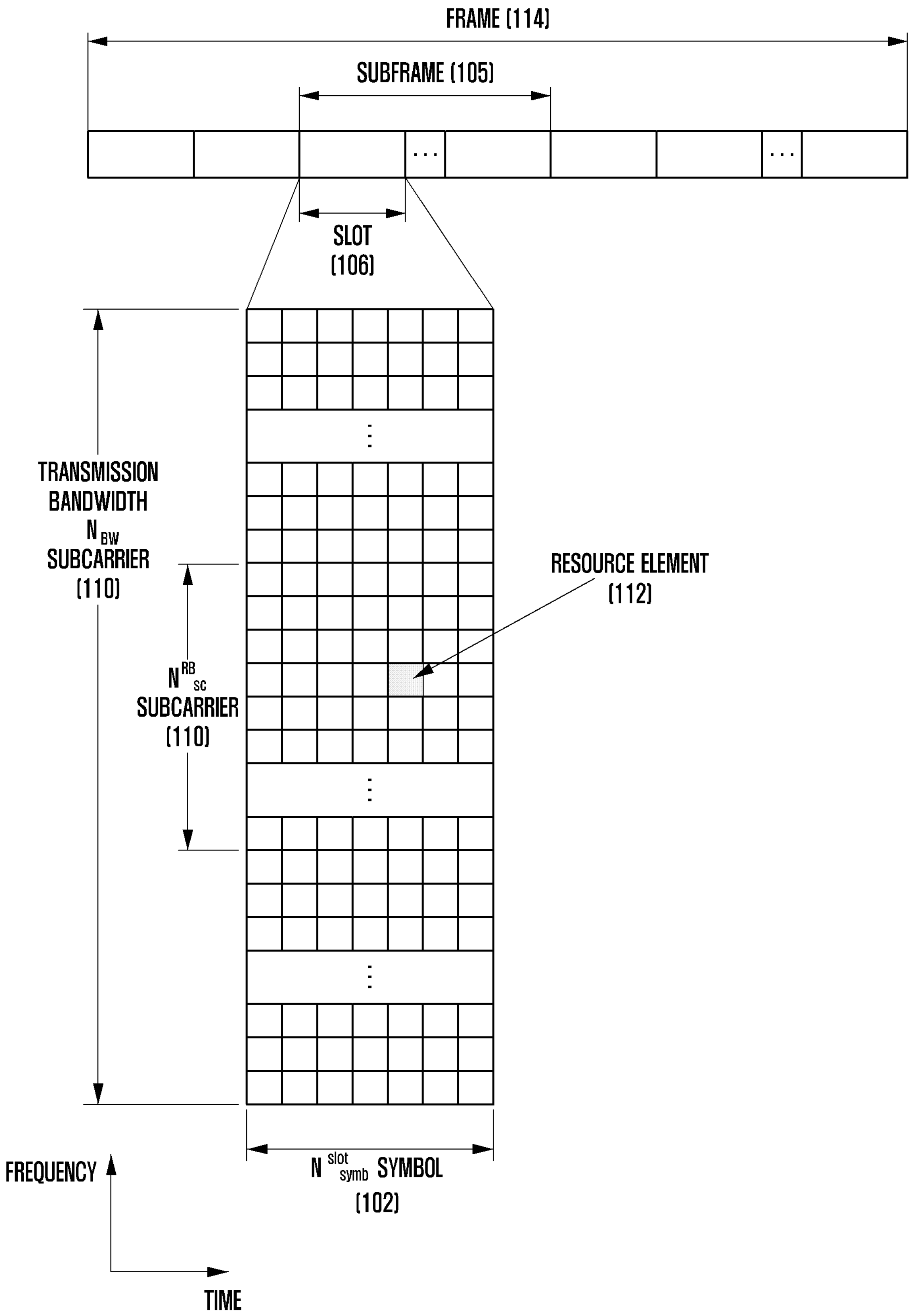
FRAME (114)
SUBFRAME (105)
SLOT
(106)
TRANSMISSION
BANDWIDTH
$N_{BW}$
SUBCARRIER
(110)
$N^{RB}_{sc}$
SUBCARRIER
(110)
RESOURCE ELEMENT
(112)
$N^{slot}_{symb}$ SYMBOL
(102)
FREQUENCY
TIME

FIG. 2

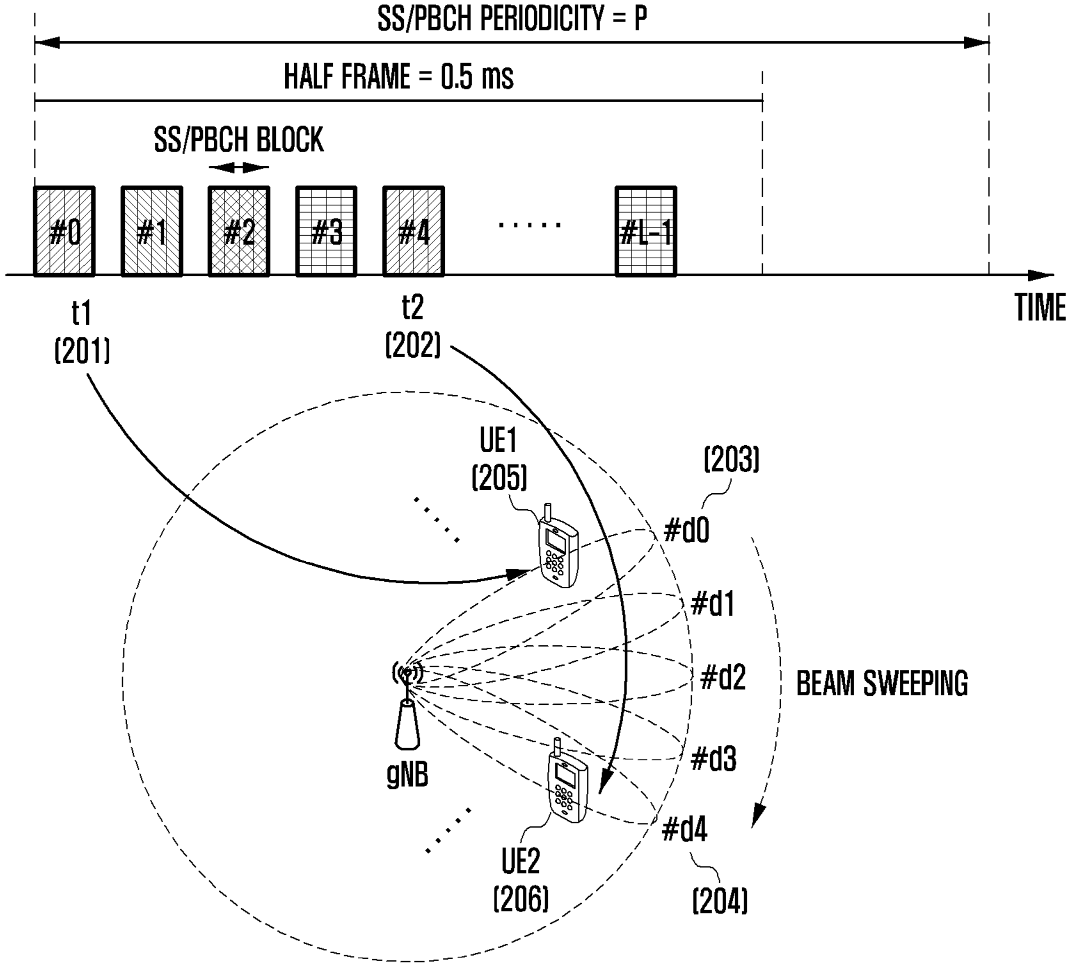
SS/PBCH PERIODICITY = P
HALF FRAME = 0.5 ms
SS/PBCH BLOCK
#0
#1
#2
#3
#4
.....
#L-1
TIME
t1
(201)
t2
(202)
UE1
(205)
(203)
#d0
#d1
#d2
#d3
#d4
BEAM SWEEPING
gNB
UE2
(206)
(204)

FIG. 3

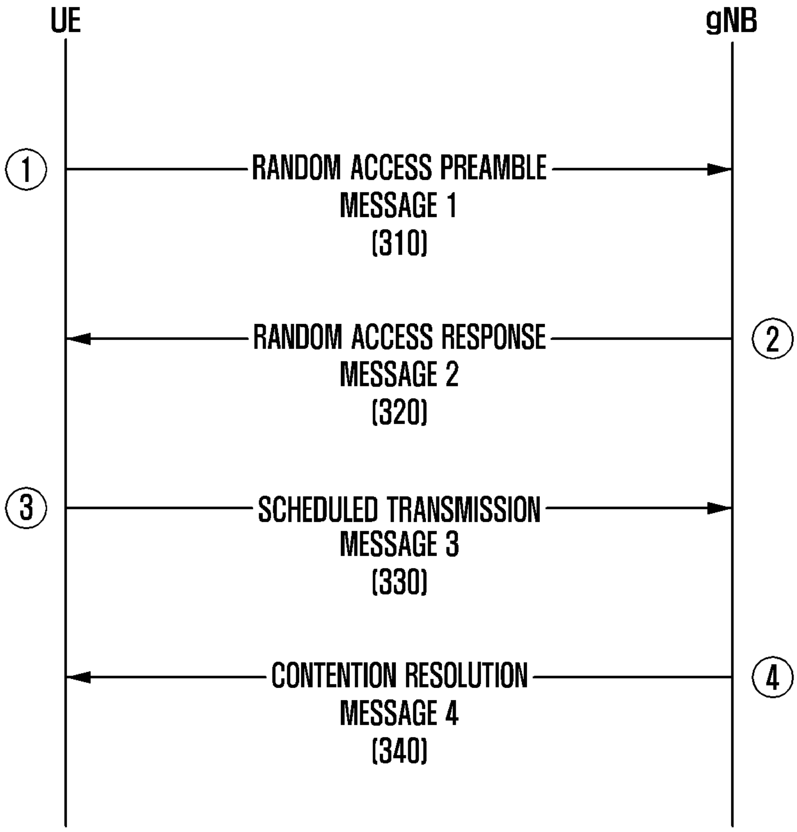
UE
gNB
①
RANDOM ACCESS PREAMBLE
MESSAGE 1
(310)
②
RANDOM ACCESS RESPONSE
MESSAGE 2
(320)
③
SCHEDULED TRANSMISSION
MESSAGE 3
(330)
④
CONTENTION RESOLUTION
MESSAGE 4
(340)

FIG. 4

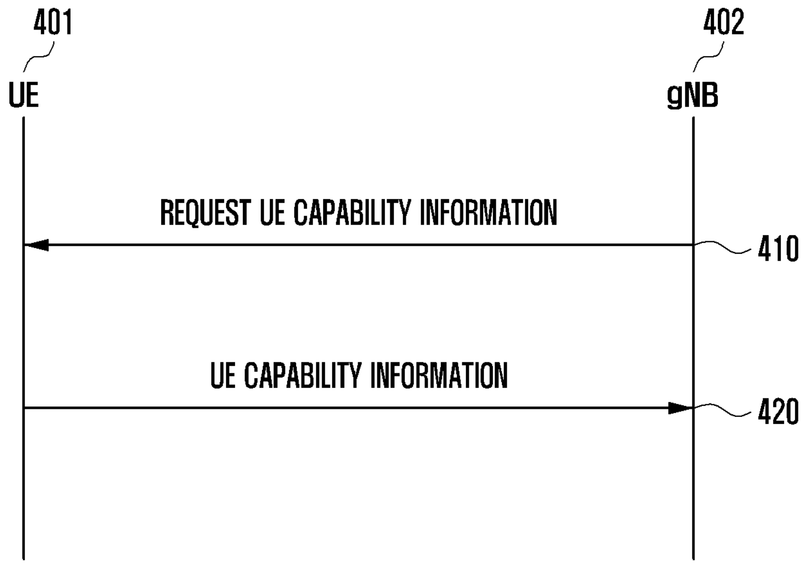
401
402
UE
gNB
REQUEST UE CAPABILITY INFORMATION
410
UE CAPABILITY INFORMATION
420

FIG. 5

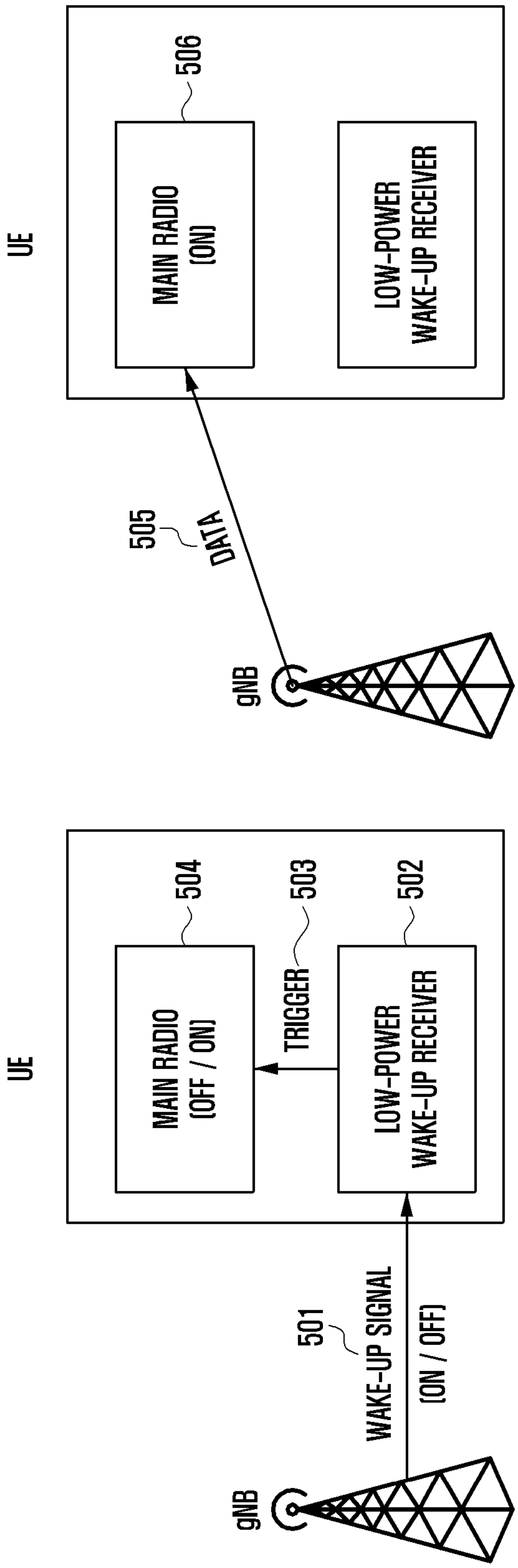
gNB
501
WAKE-UP SIGNAL
(ON / OFF)
UE
MAIN RADIO
(OFF / ON)
504
TRIGGER
503
LOW-POWER
WAKE-UP RECEIVER
502
gNB
505
DATA
UE
MAIN RADIO
(ON)
506
LOW-POWER
WAKE-UP RECEIVER

FIG. 6

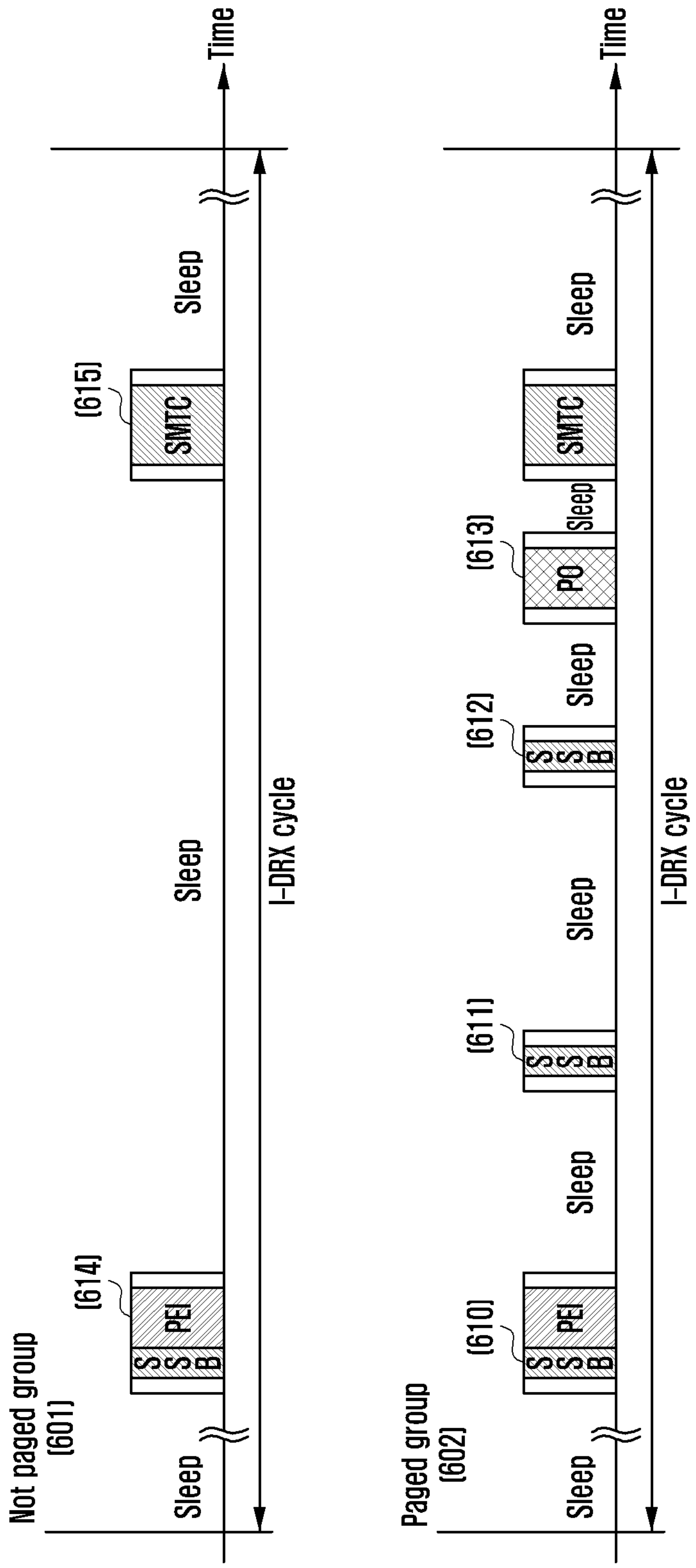
Not paged group
(601)
Sleep
SSB
PEI
(614)
Sleep
SMTC
(615)
Sleep
Time
I-DRX cycle
Paged group
(602)
Sleep
SSB
PEI
(610)
Sleep
SSB
(611)
Sleep
SSB
(612)
Sleep
PO
(613)
Sleep
SMTC
Sleep
Time
I-DRX cycle

FIG. 7

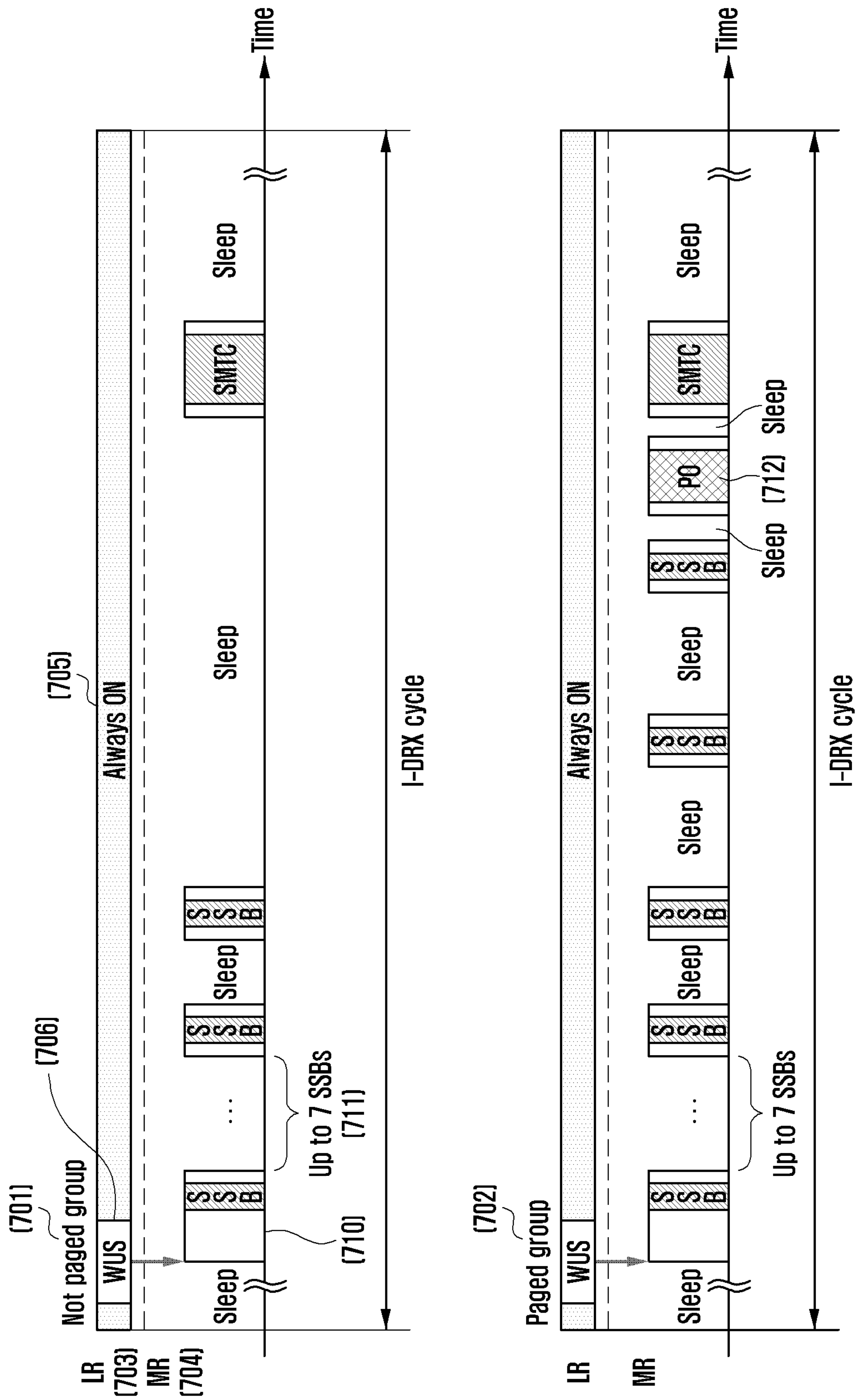
LR
(703)
MR
(704)
(701)
Not paged group
WUS
(706)
(705)
Always ON
Sleep
SSB
...
SSB
Sleep
SSB
Sleep
SMTC
Sleep
(710)
Up to 7 SSBs
(711)
Time
I-DRX cycle
LR
MR
(702)
Paged group
WUS
Always ON
Sleep
SSB
...
SSB
Sleep
SSB
Sleep
SSB
Sleep
SSB
Sleep
PO
(712)
Sleep
SMTC
Sleep
Up to 7 SSBs
Time
I-DRX cycle

FIG. 8

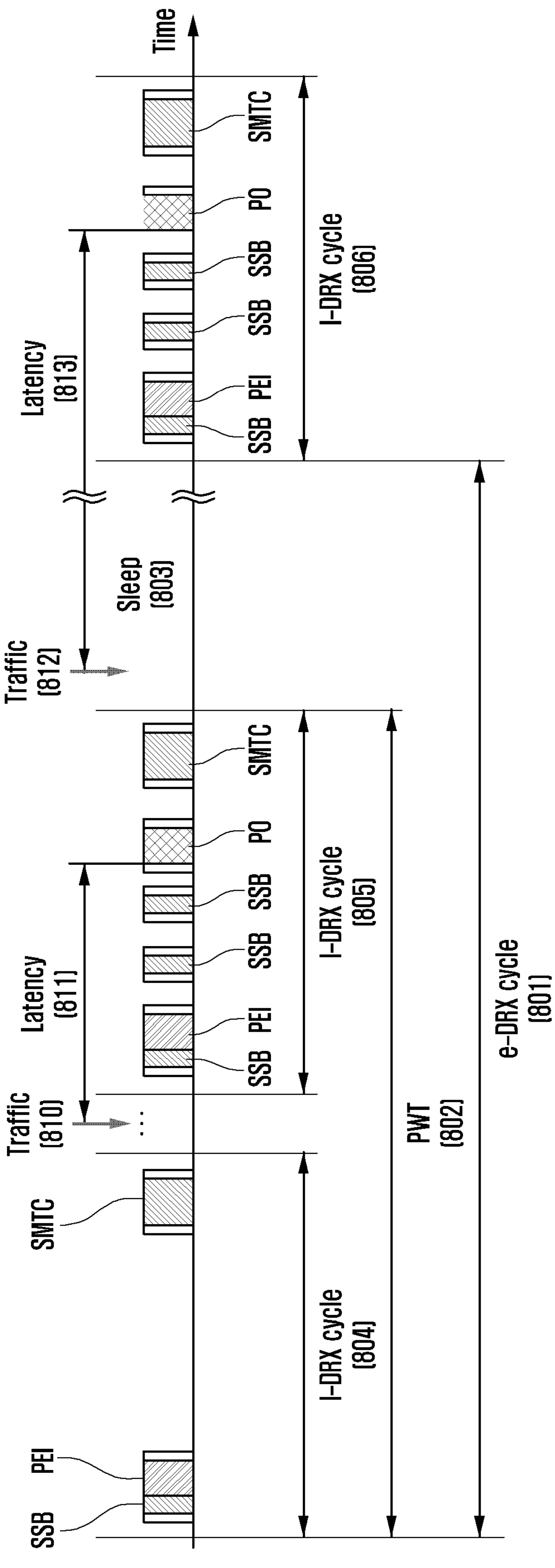

Time
SSB
PEI
SMTC
Traffic (810)
Latency (811)
SSB
PEI
SSB
SSB
PO
SMTC
Traffic (812)
Sleep (803)
Latency (813)
SSB
PEI
SSB
SSB
PO
SMTC
I-DRX cycle (804)
I-DRX cycle (805)
I-DRX cycle (806)
PWT (802)
e-DRX cycle (801)

FIG. 9

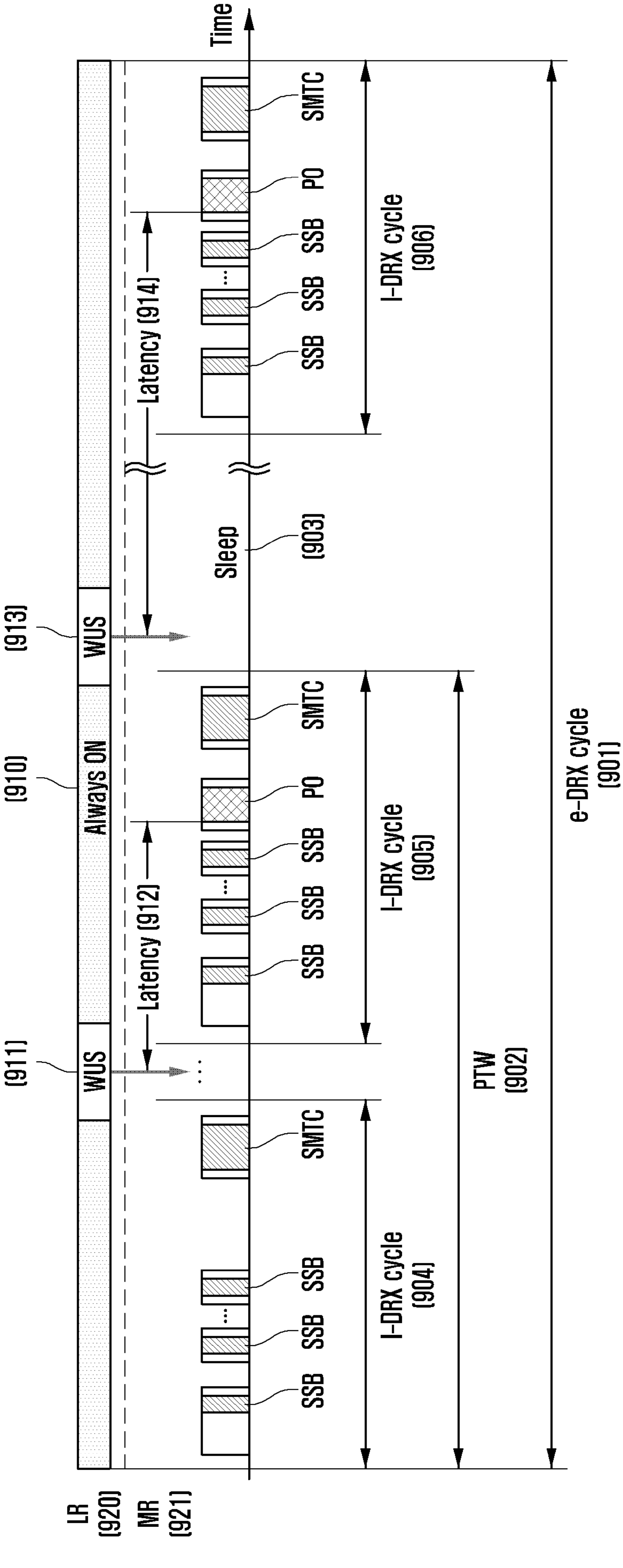
Time
SMTC
PO
SSB
SSB
SSB
I-DRX cycle
[906]
Latency [914]
Sleep
[903]
[913]
WUS
[910]
Always ON
SMTC
PO
SSB
SSB
SSB
I-DRX cycle
[905]
Latency [912]
e-DRX cycle
[901]
[911]
WUS
PTW
[902]
SMTC
SSB
SSB
SSB
I-DRX cycle
[904]
LR
[920]
MR
[921]

FIG. 10

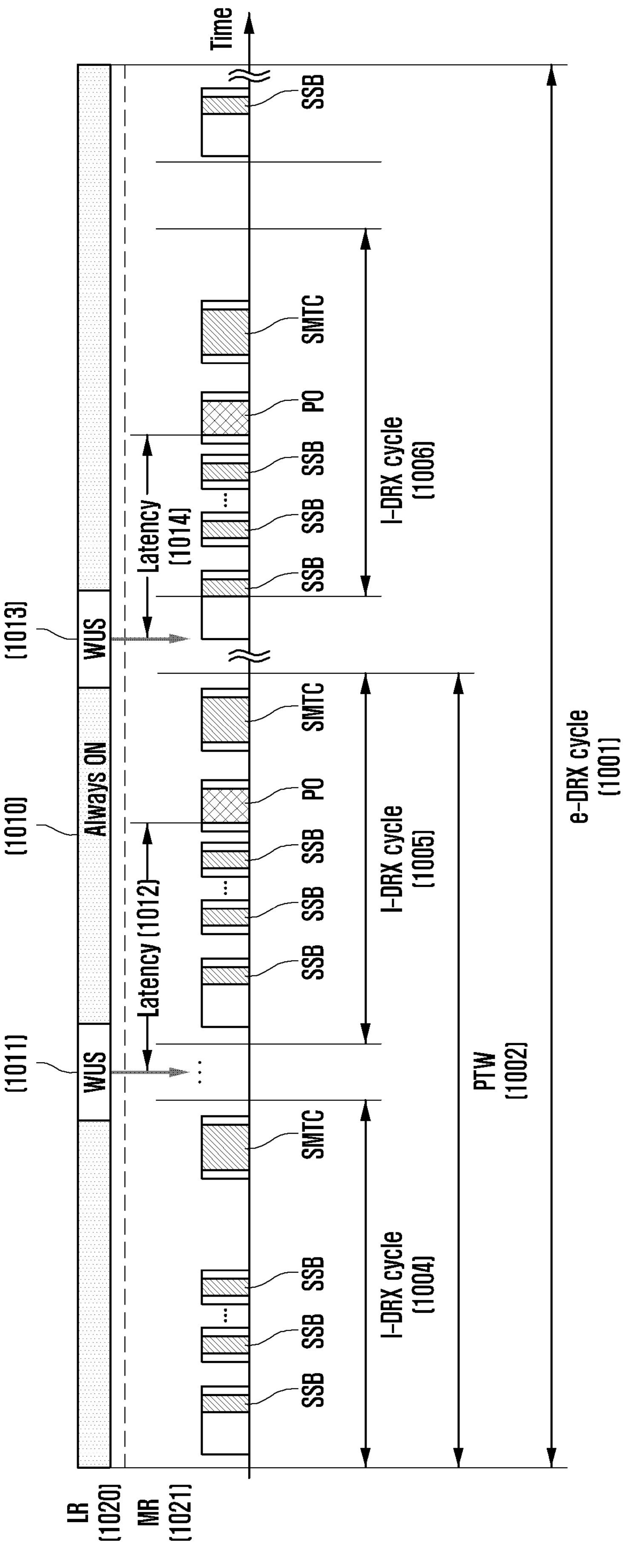
Time
SSB
SMTC
PO
SSB
SSB
SSB
Latency (1014)
I-DRX cycle (1006)
WUS
(1013)
SMTC
PO
SSB
SSB
SSB
Always ON
(1010)
Latency (1012)
I-DRX cycle (1005)
e-DRX cycle (1001)
WUS
(1011)
PTW (1002)
SMTC
SSB
SSB
SSB
I-DRX cycle (1004)
LR (1020)
MR (1021)

FIG. 11

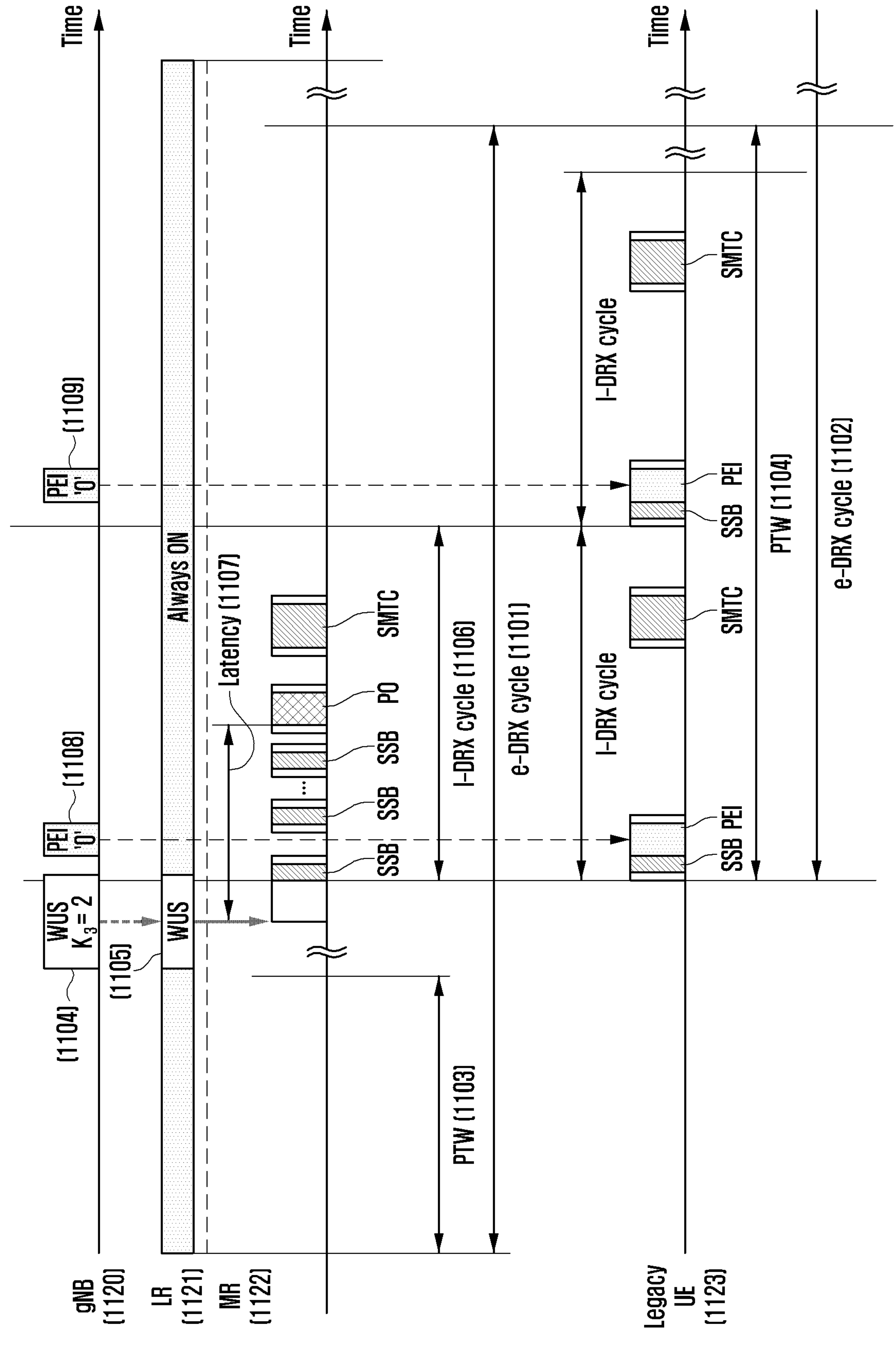
gNB (1120)
LR (1121)
MR (1122)
Legacy UE (1123)
Time
Time
Time
(1104)
WUS $K_3=2$
(1105)
WUS
PEI '0'
(1108)
PEI '0'
(1109)
Always ON
Latency (1107)
SSB
SSB
SSB
PO
SMTC
I-DRX cycle (1106)
e-DRX cycle (1101)
PTW (1103)
I-DRX cycle
I-DRX cycle
SSB
PEI
SMTC
SSB
PEI
SMTC
PTW (1104)
e-DRX cycle (1102)

FIG. 12

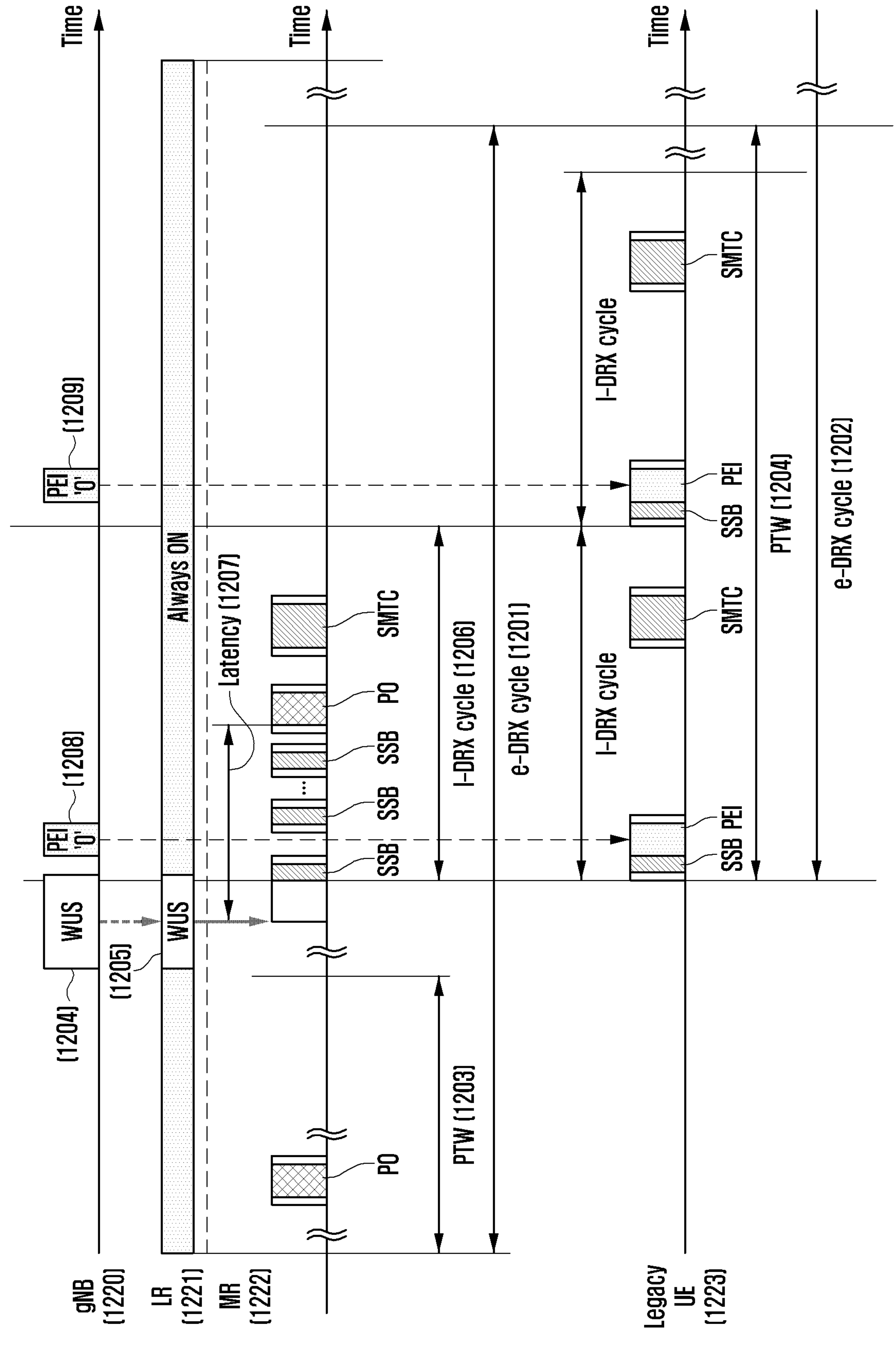
gNB (1220)
LR (1221)
MR (1222)
Legacy UE (1223)
Time
Time
Time
WUS
(1204)
WUS
(1205)
PEI '0'
(1208)
PEI '0'
(1209)
Always ON
Latency (1207)
PO
SSB
SSB
SSB
PO
SMTC
PTW (1203)
I-DRX cycle (1206)
e-DRX cycle (1201)
I-DRX cycle
I-DRX cycle
SSB PEI
SMTC
SSB PEI
SMTC
PTW (1204)
e-DRX cycle (1202)

FIG. 13

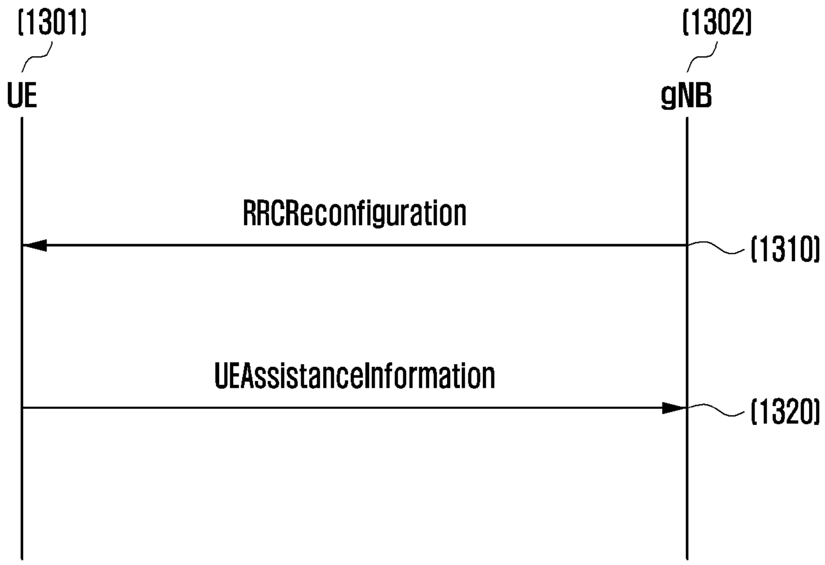
(1301)
UE
(1302)
gNB
RRCReconfiguration
(1310)
UEAssistanceInformation
(1320)

FIG. 14

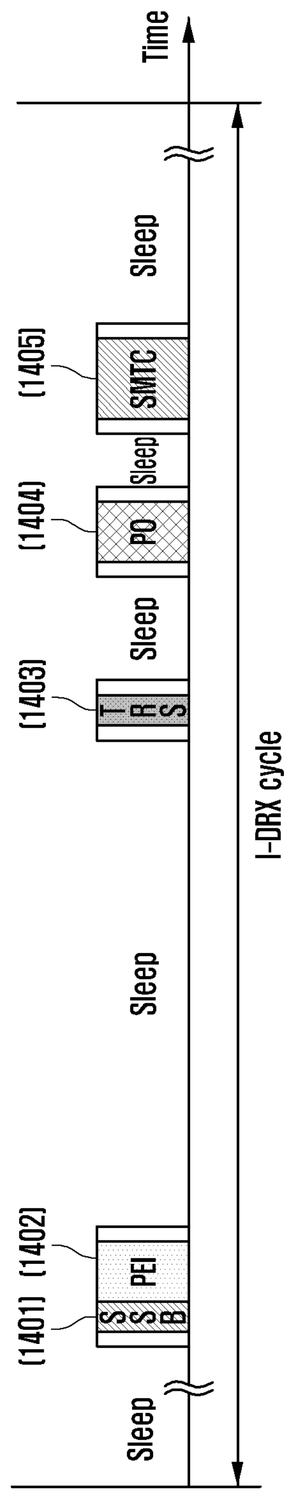
Time
Sleep
(1405)
SMTC
Sleep
(1404)
PO
Sleep
(1403)
TRS
Sleep
(1401)
(1402)
SSB
PEI
Sleep
I-DRX cycle

FIG. 15

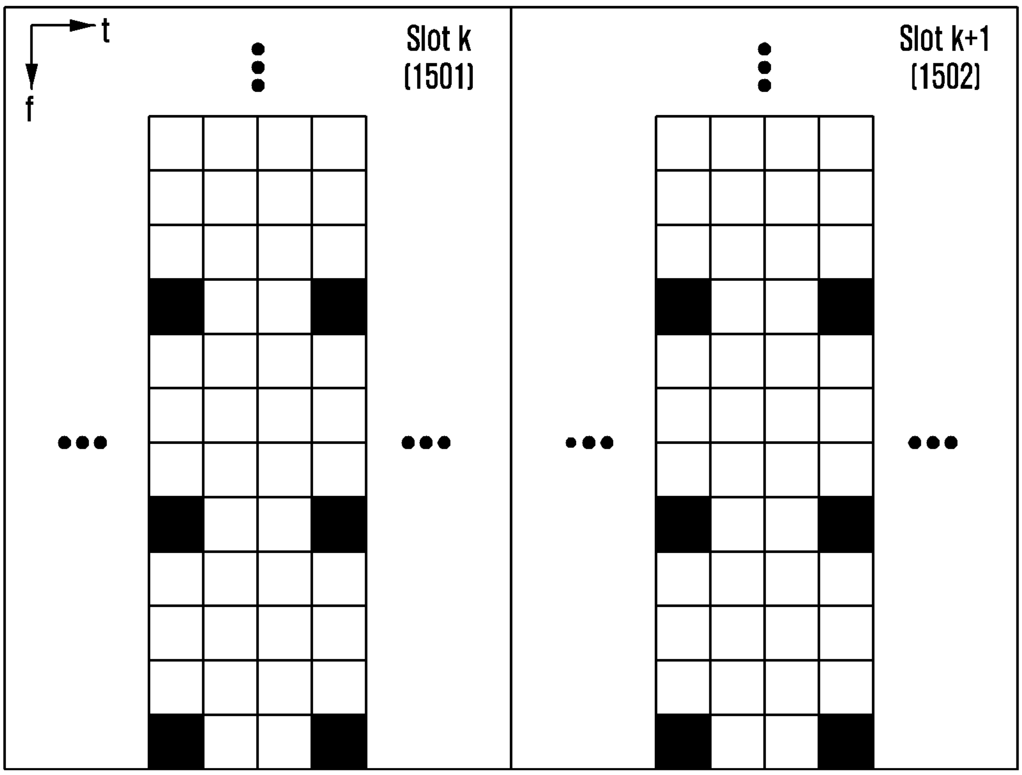

FIG. 16

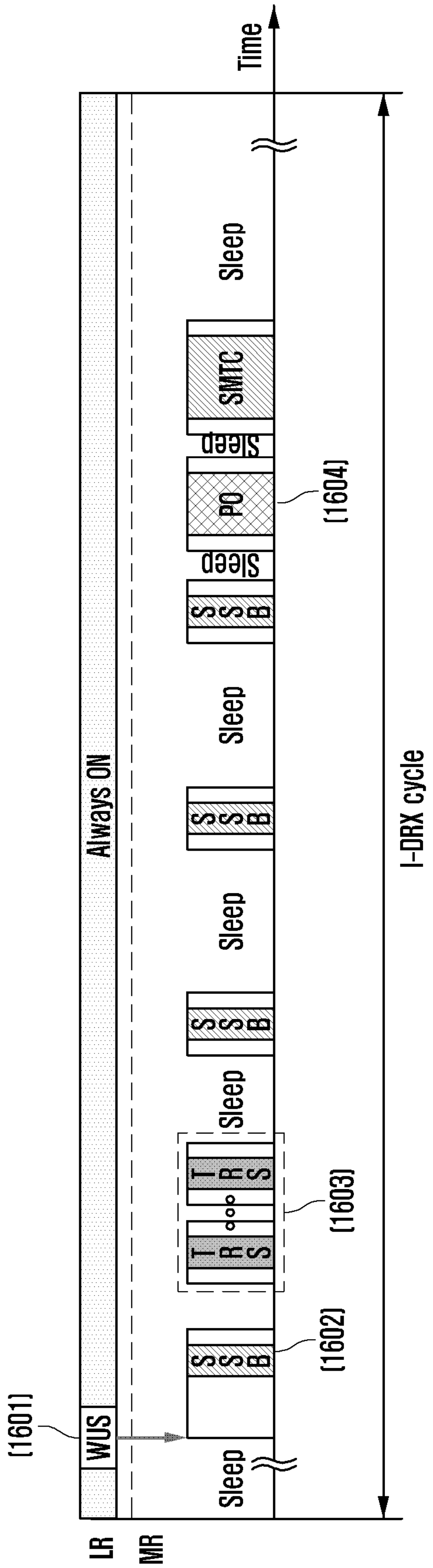
Time
LR
MR
Always ON
WUS
(1601)
Sleep
SSB
(1602)
TRS
TRS
(1603)
Sleep
SSB
Sleep
SSB
Sleep
SSB
Sleep
PO
(1604)
Sleep
SMTC
Sleep
I-DRX cycle

FIG. 17

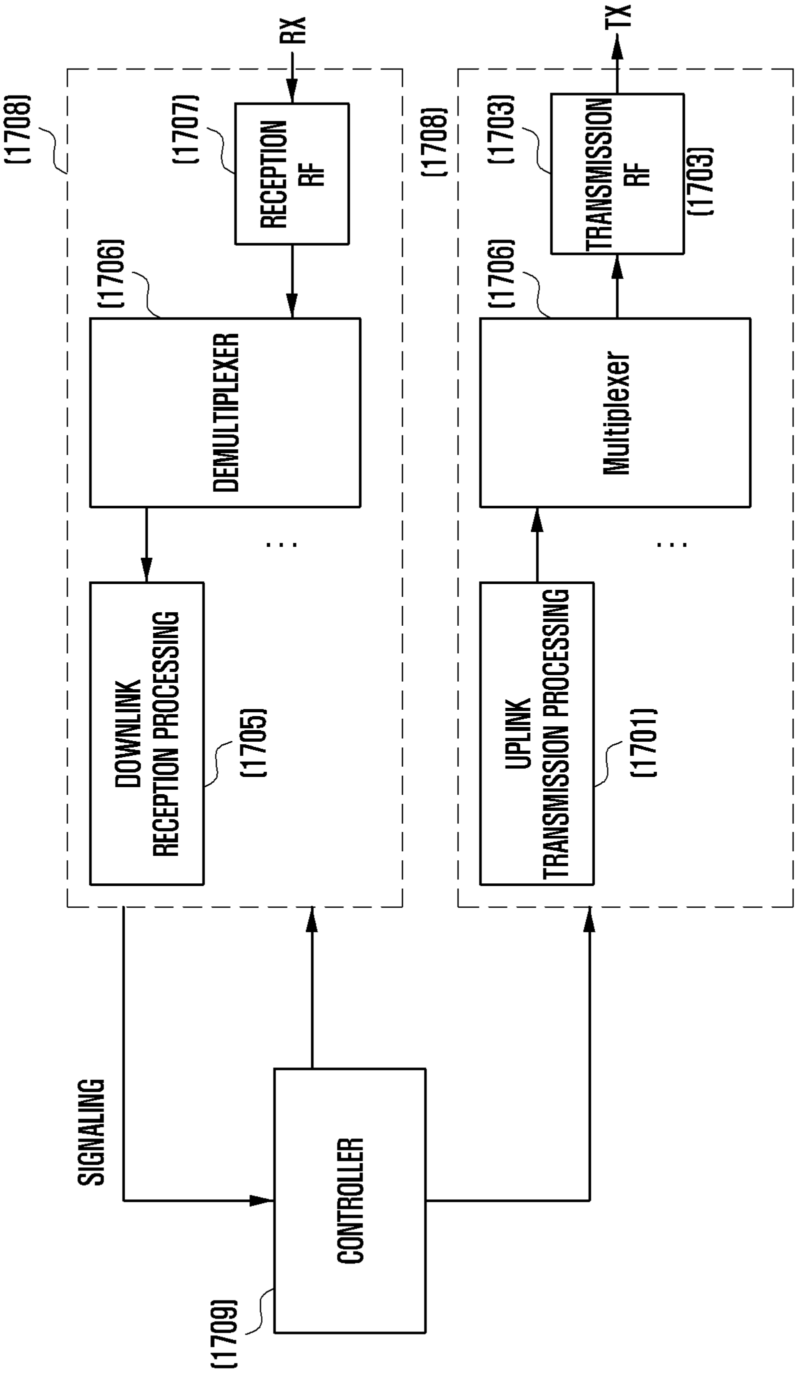
RX
TX
(1708)
(1707)
RECEPTION RF
(1706)
DEMULTIPLEXER
DOWNLINK RECEPTION PROCESSING
(1705)
(1708)
(1703)
TRANSMISSION RF
(1703)
(1706)
Multiplexer
UPLINK TRANSMISSION PROCESSING
(1701)
SIGNALING
CONTROLLER
(1709)

FIG. 18

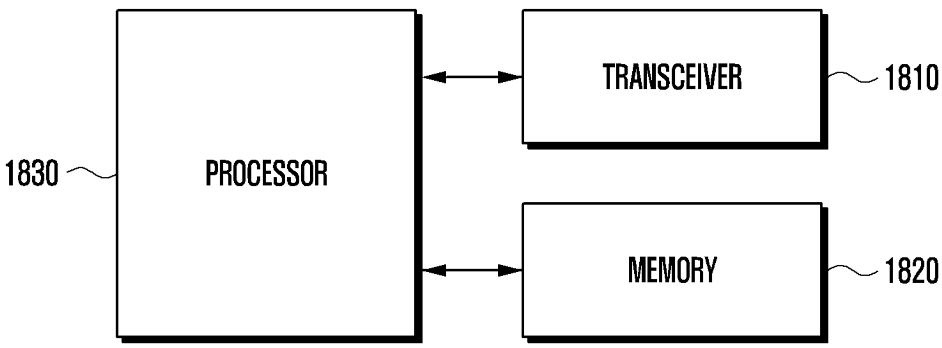

FIG. 19

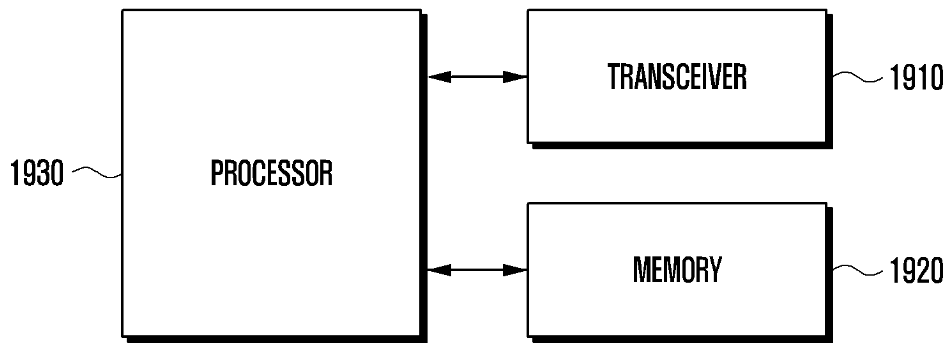

## INTERNATIONAL SEARCH REPORT

International application No.
**PCT/KR2024/000330**

**A. CLASSIFICATION OF SUBJECT MATTER**

**H04W 52/02**(2009.01)i; **H04W 72/232**(2023.01)i; **H04W 76/28**(2018.01)i; **H04W 68/02**(2009.01)i

According to International Patent Classification (IPC) or to both national classification and IPC

**B. FIELDS SEARCHED**

Minimum documentation searched (classification system followed by classification symbols)

H04W 52/02(2009.01); H04W 68/00(2009.01); H04W 68/02(2009.01); H04W 72/04(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 웨이크업 신호(wake-up signal, WUS), 메인 라디오(main radio, MR), PO(paging occasion), PEI(paging early indication), TRS(tracking reference signal)

**C. DOCUMENTS CONSIDERED TO BE RELEVANT**

| Category* | Citation of document, with indication, where appropriate, of the relevant passages | Relevant to claim No. |
|---|---|---|
| Y<br>A | FUTUREWEI. Evaluation of Low Power WUS and Performance Results. R1-2210850, 3GPP TSG RAN WG1 #111. Toulouse, France. 04 November 2022.<br>See section 2.2.1; and figure 3. | 1,4-5,8-9,12-13<br>2-3,6-7,10-11,14-15 |
| Y | US 2022-0286964 A1 (ZTE CORPORATION) 08 September 2022 (2022-09-08)<br>See paragraphs [0095]-[0096]. | 1,4-5,8-9,12-13 |
| Y | US 2022-0303900 A1 (APPLE INC.) 22 September 2022 (2022-09-22)<br>See paragraphs [0053]-[0054]. | 4,8,12 |
| A | WO 2022-207180 A1 (SONY GROUP CORPORATION et al.) 06 October 2022 (2022-10-06)<br>See page 25, line 10 - page 26, line 25; and figure 8. | 1-15 |
| A | US 2020-0205076 A1 (VIVO MOBILE COMMUNICATION CO., LTD.) 25 June 2020 (2020-06-25)<br>See paragraphs [0025]-[0094]; and figure 1. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2024** | **04 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | <br><br>Telephone No. |

Form PCT/ISA/210 (second sheet) (July 2022)

**INTERNATIONAL SEARCH REPORT**
**Information on patent family members**

International application No.
**PCT/KR2024/000330**

| Patent document cited in search report | Publication date (day/month/year) | Patent family member(s) | Publication date (day/month/year) |
|---|---|---|---|
| US 2022-0286964 A1 | 08 September 2022 | CN 115699902 A | 03 February 2023 |
| | | EP 4049486 A1 | 31 August 2022 |
| | | EP 4049486 A4 | 23 November 2022 |
| | | JP 2023-531702 A | 25 July 2023 |
| | | KR 10-2023-0017297 A | 03 February 2023 |
| | | WO 2022-000181 A1 | 06 January 2022 |
| US 2022-0303900 A1 | 22 September 2022 | CN 116420386 A | 11 July 2023 |
| | | WO 2022-077260 A1 | 21 April 2022 |
| WO 2022-207180 A1 | 06 October 2022 | CN 117397325 A | 12 January 2024 |
| | | EP 4316064 A1 | 07 February 2024 |
| | | KR 10-2023-0160916 A | 24 November 2023 |
| US 2020-0205076 A1 | 25 June 2020 | CN 108966322 A | 07 December 2018 |
| | | CN 108966322 B | 07 September 2021 |
| | | EP 3627906 A1 | 25 March 2020 |
| | | US 11252665 B2 | 15 February 2022 |
| | | WO 2018-210135 A1 | 22 November 2018 |

Form PCT/ISA/210 (patent family annex) (July 2022)